# EUROPEAN PATENT APPLICATION

(11) **EP 4 613 882 A1**
(43) Date of publication of application: **10.09.2025**
(21) Application number: 23902756.8
(22) Date of filing: 13.12.2023
(51) Int. Cl.: C21B 3/06, C21B 3/08

(54) **SLAG GRANULATION METHOD AND APPARATUS**

(30) Priority: 13.12.2022 CN 202211604588; 13.12.2022 CN 202211604457; 13.12.2022 CN 202223367914 U; 13.12.2022 CN 202223349130 U; 13.12.2022 CN 202223349128 U; 13.12.2022 CN 202211603925; 13.12.2022 CN 202223349142 U
(71) Applicant: BAOSHAN IRON & STEEL CO., LTD., Shanghai 201900 (CN)
(72) Inventor: XIAO, Yongli, Shanghai 201900 (CN); LI, Yongqian, Shanghai 201900 (CN); XIE, Mengqin, Shanghai 201900 (CN); ZHANG, Youping, Shanghai 201900 (CN); WANG, Yingjie, Shanghai 201900 (CN); GUAN, Yunze, Shanghai 201900 (CN)
(74) Representative: Maiwald GmbH
(86) International application number: PCT/CN2023/138507
(87) International publication number: WO 2024/125562

(57) **Abstract**

The present invention provides a molten slag granulation method, which comprises crushing the molten slag to obtain molten slag granules, then cooling the molten slag granules, and collecting the resulting granulated slag. The invention also discloses a molten slag granulation apparatus for implementing the corresponding molten slag granulation method, comprising: a granulation mechanism for granulating the molten slag to obtain crushed molten slag granules; and a cooling mechanism for cooling the molten slag granules to obtain granulated slag.

## Description

### TECHNICAL FIELD

The present application relates to a technology field of steel smelting and particularly relates to a molten slag granulation method and apparatus.

### BACKGROUND

Blast furnace molten slag is a molten waste residue discharged from a blast furnace during the smelting of pig iron. It is mainly composed of CaO, SiO₂, Al₂O₃, and MgO. It is one of the most abundant by-products produced in the metallurgical industry. About 350 kilograms of blast furnace molten slag are produced per ton of iron produced. The tapping temperature can reach up to 1450-1650°C. Each ton of slag contains (1260-1880) × 10³ kJ of sensible heat, which is equivalent to the calorific value of 60 kg of standard coal. There is great potential, economic feasibility, and practicality in the aspect of recovering this waste heat. In this situation, research on the recovery and utilization of blast furnace molten slag waste heat has become a focus of attention for enterprises in recent years.

At present, the treatment of blast furnace molten slag mostly adopts a water quenching process. The molten slag is flushed into water slag by high-pressure water, and the high-grade sensible heat is transferred to the water slag and wastewater at about 80°C, losing its value for recovery. Moreover, processing 1 ton of blast furnace molten slag, consumes 0.4-0.5 tons of water and emits a large amount of waste steam rich in pollutants such as H₂S and SO₂. In the subsequent resource utilization (such as micronization), 15-20% of the moisture in the water slag needs to be dried, requiring about 1000 m³ of hot air of 500°C per ton of blast furnace slag.

Due to the low thermal conductivity of blast furnace molten slag and its rapidly increasing viscosity with decreasing temperature, the heat transfer of blast furnace molten slag is slow, making waste heat recovery difficult. Rapidly micronizing the blast furnace molten slag to increase the heat transfer area and improve heat transfer efficiency can enable rapid and efficient recovery of the sensible heat from the blast furnace molten slag. Rapid cooling of molten slag granules not only creates conditions for heat recovery but also maintains glass phase content and activity of the cooled slag granules to meet the requirements of slag micropowder raw materials and maintains the existing pathways for slag resource utilization.

So far, the processes for rapid dry granulation of molten slag are mainly air granulation method and centrifugal granulation method. The air granulation method has not been widely applied in the treatment of blast furnace molten slag due to its high noise and the tendency to generate slag wool. Only a few steel mills adopt this method to treat steel slag with good fluidity. Centrifugal granulation mainly adopts rotating discs or cups as granulators, which disperse and break the molten slag into small droplets by centrifugal force for rapid cooling, ensuring the glass phase content and activity of the cooled slag granules meet the requirements of slag micro-powder raw materials. However, the centrifugal granulation process is still in the experimental exploration stage, and there are still issues such as slag crusting, uneven particle size of granulated slag, and the tendency to generate slag wool, requiring further research and improvement.

The Chinese patent application CN201410755689.9, titled "High temperature Molten slag Waste Heat Recovery System and Method", discloses a method and apparatus for granulating molten slag by using a rotating disc, and recovering the heat from high-temperature granulated slag through a waste heat boiler.

The Chinese patent application CN201010566938.1, titled "Metallurgical Molten slag Dry Granulation and Thermal Energy Recovery System", proposes a metallurgical molten slag dry granulation and thermal energy recovery system. Wherein the liquid molten slag is subjected to dry granulation by centrifugal rotation and air flow pulse. The sensible heat in the molten slag is transferred to hot air through pulsed air flow and fluidized gas, and the heat from the hot air is recovered by a waste heat boiler to form medium-low pressure steam for turbine power generation.

The Chinese patent CN101736101B, titled "Semi-wet Slag Treatment Waste Heat Recovery Power Generation System and Method", and the Chinese patent CN102433401B, titled "Molten Slag Rapid Cooling Dry Granulation and Sensible Heat Recovery Power Generation System and Method ", provide solutions that introduce water mist on the basis of air granulation, using a high-pressure water-air atomization device to rapidly cool and granulate the molten slag into glass-phase small particles, then recovering waste heat from high-temperature granulated slag through a fluidized bed or vibrating bed.

At present, the granulation of blast furnace molten slag mainly relies on the water quenching process, as the simple air granulation process is not suitable. The centrifugal granulation process is still under development. The utilization of waste heat from blast furnace molten slag is limited to the conversion of hot air/nitrogen into steam and power generation, with low efficiency.

### SUMMARY

To overcome the problems existed in the existing technology, the present invention provides various molten slag granulation methods and apparatuses, enabling the safe granulation of blast furnace molten slag, and selectively recovering and utilizing the heat generated during the granulation process for immediate or subsequent use.

The first aspect of the present invention provides a molten slag granulation method, comprising crushing molten slag to obtain molten slag granules, then cooling the molten slag granules, and collecting the resulting granulated slag.

Specifically, the above-mentioned molten slag granulation method can be performed as following.

The molten slag is subjected to jet granulation to obtain surface-solidified granules and steam, then the surface-solidified granules are cooled in a swirl flow field to obtain solid slag granules.

In the present invention, unless otherwise specified, the jet refers to a high-speed mist fluid, which is a gas-water mixture. Water and compressed air are sprayed together to form a high-speed mixture of gas and water droplets with a particle size between 0.01-0.20 mm. The lower limit of the velocity of the gas-water mixture is 20 m/s, preferably 50 m/s, more preferably 70 m/s, and most preferably 90 m/s. The upper limit of the velocity of the water droplets is usually not specified, but for power consumption considerations of apparatus, the upper limit of the velocity of the water droplets can be 150 m/s, preferably 120 m/s.

Unless otherwise specified, the molten slag of the present invention refers to blast furnace molten slag, which has a discharge temperature of 1300-1500°C. During the molten slag granulation process of the present invention, the molten slag is firstly crushed and granulated by the jet (high-speed gas-water mixture), the heat is partially transferred to the water droplets after contacting with the jet, and the surface of the molten slag is solidified in the fine water droplets to form surface solidified granules. At this time, the temperature of the granules is about 800-1000°C, so the core of the granules remains molten, while the high-speed water droplets absorb heat and form steam. Subsequently, the surface solidified granules enter a swirl flow field, and undergo high-speed revolution and rotation under the action of the swirl flow field. An orbital speed of granules in a swirl flow field is 5-25 rad/s, an orbital radius is 80-120 mm, and a rotational speed is 100-400 rad/s. With the high-speed revolution and rotation of granules, the separation and peeling of the surface boundary layer are accelerated, the thickness of the boundary layer is reduced, and the heat transfer interface is rapidly updated, thereby reducing thermal resistance and improving heat transfer efficiency. During this process, the granules are cooled by the ambient atmosphere, forming solid slag granules.

In the present invention, the swirl flow field is provided by a cyclone separator. The swirl flow field increases the movement path of the molten slag and enhances the heat exchange efficiency between the molten slag granules and the ambient atmosphere. Therefore, compared with other cooling methods in the existing technology, the cooling effect is better.

According to one embodiment of the present invention, a method for coupled utilization of molten slag waste heat recovery is provided, comprising the following steps:
1) The molten slag is fed into a flow guiding cover and is impacted, crushed, and granulated into granulated molten droplets with a particle size of 5 mm or less by a mist fluid ejected from a granulator, the granulated molten droplets fly directionally along a flow guiding cover with the mist fluid, and the granulated molten droplets are cooled and solidified by heat-exchanging with the mist fluid during the formation and flying process, generating granulated slag of 1000°C or less (the morphology of the slag granules depends on their temperature; at this stage, the granulated slag is only the surface solidified and not completely cooled into solid slag granules) and a gas flow of 300-600°C, achieving granulation and cooling solidification of the molten slag;
2) The granulated slag and the gas flow directly enter a cyclone separator after exiting the flow guiding cover, separation of slag and gas is achieved under combined action of centrifugal force and gravity, the separated granulated slag cools to 700-800°C and exits the bottom of the cyclone separator;
   The separated gas flow passes through the cyclone separator and an overflow pipeline, and its temperature is reduced to 150-300°C after heat-exchanging with a cooling water in a spiral heat exchange pipeline inside the overflow pipeline; after exiting the cyclone separator and overflow pipeline, the gas flow enters a waste heat recovery device, where it further exchanges heat with heat exchange pipeline carrying cooling water, forming exhaust gas with a temperature of 130-150°C;
   The cooling water in the heat exchange pipeline of the waste heat recovery device absorbs heat and vaporizes, then saturated steam at 0.4-0.5 MPa is obtained by undergoing steam-water separation and returned to the granulator as a fluid for granulating the molten slag;
   The cooling water inside a spiral heat exchange pipeline absorbs heat and vaporizes, then saturated steam at 1.2-1.6 MPa and 188-201°C is obtained by undergoing steam-water separation, the saturated steam enters a superheated steam generator and is further heated to obtain superheated steam at 1.2-1.6 MPa and 250-350°C;
3) The granulated slag exiting the bottom of the cyclone separator enters a rotary bed, performing a contact heat exchange with a heat exchange pipeline carrying cooling water, cooling to 150-300°C, and then being discharged into a slag bin for storage;
   The cooling water in the heat exchange pipeline of the rotary bed absorbs heat and vaporizes, and then saturated steam at 1.2-1.6 MPa and 188-201°C is generated by undergoing steam-water separation, the saturated steam enters a superheated steam generator and is further heated to obtain superheated steam at 1.2-1.6 MPa and 250-350°C;
4) The granulated slag in the slag bin is transported into a gas jet mill, where it is impacted and ground into ultrafine micropowder using superheated steam obtained in steps 2) and 3);
   The pressure of superheated steam falls to atmospheric pressure, the temperature falls to 150-250°C. The steam then enters a waste heat recovery device, where it further exchanges heat with a heat exchange pipeline carrying cooling water, forming exhaust gas at 130-150°C;
   The cooling water in the heat exchange pipeline of the waste heat recovery device absorbs heat and vaporizes, and then saturated steam at 0.4-0.5 MPa is obtained by undergoing steam-water separation and returned to the granulator as a fluid for granulating the molten slag.

Preferably, the exhaust gas is purified by dust removal and desulfurization before emission.

Preferably, in step 1), the mist fluid is one or more selected from compressed air at 0.5-0.8 MPa, high-pressure water mist at 0.4-0.5 MPa, low-pressure steam at 0.4-0.8 MPa, or a mixture thereof.

Preferably, in step 1), the granulated molten droplets have a solidification rate of 80% or more for granules with a particle size of 2 mm or less after cooling and solidification.

Preferably, in step 3), the saturated steam is further heated using natural gas or mixed coal gas generated during steel smelting process in the superheated steam generator.

Preferably, in step 3), the granulated slag entering the slag bin is transported to a slag powder production line and directly ground into slag micropowder with a specific surface area of 420-440 m²/kg.

Preferably, in step 4), the ultrafine micropowder has a specific surface area of 450-750 m²/kg.

Of course, the method for coupled utilization of slag waste heat recovery of the present invention can also be implemented as follows. Specifically, according to another embodiment of the present invention, the method for coupled utilization of slag waste heat recovery comprises the following steps:
1) A molten slag enters into a flow guiding cover, where it is impacted, crushed, and granulated into granulated molten droplets with a particle size of 5 mm or less by a mist fluid ejected from a granulator, the granulated molten droplets are directed to fly along the flow guiding cover with the mist fluid, and the granulated molten droplets are cooled and solidified by heat-exchanging with a mist fluid during the formation and flying process, generating surface solidified (about 1250°C) granulated slag and a gas flow at around 100°C, thereby achieving granulation and cooling solidification of the molten slag;
2) The granulated slag and the gas flow directly enter a cyclone separator after exiting the flow guiding cover, under the combined action of centrifugal force and gravity, slag and gas exchange heat and are separated, the separated granulated slag cools to 650-850°C and exits from the bottom of the cyclone separator;
   The gas flow enters a waste heat boiler through the overflow pipeline after being heated to 200-600°C by slag granules in the cyclone separator.
3) After the temperature falls to 150-300°C by heat exchange in the waste heat boiler, the gas flow enters a waste heat recovery device, where it further exchanges heat with a heat exchange pipeline carrying cooling water, reducing the gas temperature to 130-150°C;
   The cooling water in the heat exchange pipeline of the waste heat recovery device absorbs heat and vaporizes, then saturated steam at 0.4-0.5 MPa is obtained by undergoing steam-water separation and returned to the granulator as a fluid for granulating the molten slag;
   The cooling water inside the waste heat boiler absorbs heat and vaporizes, then saturated steam at 1.2-1.6 MPa and 188-201°C is obtained by undergoing steam-water separation, the saturated steam enters a superheated steam generator, where it is further heated to obtain superheated steam at 1.2-1.6 MPa and 250-350°C;
4) The granulated slag exiting the bottom of the cyclone separator enters a rotary bed, where it exchanges heat with a heat exchange pipeline carrying cooling water, cooling to 150-300°C, and then being discharged into a slag bin for storage;
   The cooling water in the heat exchange pipeline of the rotary bed absorbs heat and vaporizes, and then the saturated steam at 1.2-1.6 MPa and 188-201°C is generated by undergoing steam-water separation, the saturated steam enters a superheated steam generator and is further heated to obtain superheated steam at 1.2-1.6 MPa and 250-350°C;
5) The granulated slag in the slag bin is transported into a gas jet mill, where it is impacted and ground into ultrafine micropowder using the superheated steam obtained by steps 2) and 3);
   A pressure of the superheated steam falls to atmospheric pressure, a temperature falls to 150-250°C, and then the steam enters a waste heat recovery device, where it further exchanges heat with a heat exchange pipeline carrying cooling water, forming exhaust gas at 130-150°C;
   The cooling water in the heat exchange pipeline of the waste heat recovery device absorbs heat and vaporizes, and then saturated steam at 0.4-0.5 MPa is obtained by undergoing steam-water separation and returned to the granulator as a fluid for granulating the molten slag.

According to another embodiment of the present invention, a blast furnace molten slag granulation method using a blast furnace molten slag granulation apparatus with a high-speed steam nozzle is provided. Water entering a pipeline is pressurized by a water pump and then enters a heat exchanger, where it is heated by heat from a waste heat recovery pipeline; the water is in a high temperature and high pressure state that is above atmospheric pressure and above the boiling point temperature at atmospheric pressure; the water vaporizes instantly at atmospheric pressure after being ejected from a nozzle, forming a high-speed jet containing steam (for example, a jet speed of 90-110 m/s) that impacts molten slag flowing out of a slag chute, the high-speed jet make the molten slag be cooled and crushed into small granules that fall into the bottom of molten slag granulator body; the mixed jet ejected from the nozzle completely turns into steam after impacting molten slag and flows out from the top of the apparatus as a waste heat resource for subsequent use.

Preferably, the water entering a pipeline is pressurized by a water pump, and a pressure inside the pipeline rises to 0.1-1 MPa; the heat from the waste heat recovery pipeline makes a temperature of water inside the heat exchanger raise to 100-182°C.

Another embodiment of the present invention provides a horizontal molten slag granulation process with gas-water mixing, wherein a high-speed airflow provided by an air nozzle array component composed of gas nozzles is used to crush the falling molten slag and obtaining molten slag granules; at the same time, the molten slag granules are sprayed with water mist by gas-liquid dual-fluid nozzles in a row to be rapidly cooled, and the molten slag granules are applied an auxiliary pushing force to make more accurately fall into a rear slag granule collection section.

Preferably, the high-speed gas flow has a speed of 90-110 m/s.

The second aspect of the present invention provides a molten slag granulation apparatus, comprising:
a granulation mechanism, for granulating molten slag to obtain crushed molten slag granules; and
a cooling mechanism, for cooling the molten slag granules to obtain granulated slag.

Specifically, the above-mentioned molten slag granulation apparatus can be configured as follows.

According to one embodiment of the present invention, an apparatus for implementing the method for coupled utilization of slag waste heat recovery is provided. Specifically, an apparatus for the method of coupled utilization of blast furnace molten slag waste heat recovery provided by the present embodiment, comprises:
a flow guiding cover, which is a cylindrical structure; preferably, a cross-section of the flow guiding cover is rectangular with an aspect ratio of 2:1 to 5:1; more preferably, an inlet end of the flow guiding cover is installed with an online weighing device;
a granulator, an outlet end of the granulator is connected to the inlet end of the flow guiding cover;
a cyclone separator, a material inlet is arranged on a side-wall of the cyclone separator and a material outlet is arranged at the bottom of the cyclone separator; the material inlet is connected to the outlet end of the flow guiding cover,
an overflow pipeline, a lower part of the overflow pipeline is vertically inserted into the cyclone separator, and a spiral heat exchange pipeline is arranged inside the overflow pipeline;
a first steam-water separator, a cooling water inlet, a cooling water outlet, a steam inlet, and a steam outlet are arranged on the first steam-water separator; the cooling water inlet is connected to a cooling water pipeline, the cooling water outlet is connected to the inlet end of a spiral heat exchange pipeline inside the overflow pipeline through a pipeline and a water pump, and the steam inlet is connected to the outlet end of the spiral heat exchange pipeline inside the overflow pipeline,
a waste heat recovery device, a gas inlet and a gas outlet are arranged on a shell of the waste heat recovery device, and a heat exchange pipeline is arranged inside the waste heat recovery device, and the gas inlet is connected to the outlet end of the overflow pipeline;
a second steam-water separator, a cooling water inlet, a cooling water outlet, a steam inlet, and a steam outlet are arranged on the second steam-water separator; the cooling water inlet is connected to a cooling water pipeline, the cooling water outlet is connected to the inlet end of the heat exchange pipeline in the waste heat recovery device through a pipeline and a water pump, the steam inlet is connected to the outlet end of the heat exchange pipeline in the waste heat recovery device through a pipeline, and the steam outlet is connected to the inlet end of the granulator through a pipeline;
a rotary bed, the rotary bed is a cylindrical structure, a heat exchange pipeline is arranged inside the rotary bed, an inlet end of the rotary bed is connected to the material outlet of the cyclone separator, an outlet end of the rotary bed is connected to the slag bin, and a pushing device for driving the rotary bed to rotate is arranged on the rotary bed;
a third steam-water separator, a cooling water inlet, a cooling water outlet, a steam inlet, and a steam outlet are arranged on the third steam-water separator; wherein the cooling water inlet is connected to a cooling water pipeline, the cooling water outlet is connected to the inlet end of the heat exchange pipeline of the rotary bed through a pipeline and a water pump, and the steam inlet is connected to the outlet end of the heat exchange pipeline of the rotary bed;
a gas jet mill, a feed pipe, a gas inlet pipe, and a gas outlet pipe are arranged on a shell of the gas jet mill; the feed pipe of the gas jet mill is connected to the slag bin, and the gas outlet pipe of the gas jet mill is connected to the gas inlet of the waste heat recovery device;
a superheated steam generator, a gas inlet pipe and a gas outlet pipe are arranged on a shell of the superheated steam generator, the gas inlet pipe of the superheated steam generator is connected to the steam outlet of the first steam-water separator and the steam outlet of the third steam-water separator, and the gas outlet pipe of the superheated steam generator is connected to the gas inlet pipe of the gas jet mill.

Preferably, a vibrator is arranged on the above-mentioned slag bin.

According to another embodiment of the present invention, a blast furnace molten slag granulation apparatus with a high-speed steam nozzle is provided, comprising:
a molten slag granulator body, which is a box structure, a slag chute for molten slag entry is arranged on one side of the upper part of the molten slag granulator body, and a steam outlet passage is arranged on the top of the molten slag granulator body;
a steam spray mechanism, comprising a first control valve, a water pump, a second control valve, a pressure gauge, a heat exchanger, a thermometer, and a nozzle arranged in sequence along a pipeline; an inlet end of the pipeline is connected to a water source; the nozzle is arranged on a side-wall of the molten slag granulator body where the slag chute is located, the axial direction of the nozzle forms an angle with the axial direction of the slag chute, with the nozzle outlet facing the molten slag flowing out of the slag chute; and wherein
a waste heat recovery pipeline and a heat-exchange fluid outlet pipeline are arranged on the heat exchanger; wherein a valve is installed on the waste heat recovery pipeline.

Preferably, the axial direction of the nozzle forms an angle of 30-60 degrees with the axial direction of the slag chute.

The blast furnace molten slag treatment process of the blast furnace molten slag granulation apparatus with a high-speed steam nozzle of the present embodiment uses a water pump to pressurize water entering the pipeline and then directing it into the heat exchanger. The heat source from the waste heat resource recovery pipeline raises the temperature of the water in the heat exchanger, reaching a high-temperature and high-pressure state above atmospheric pressure and above the boiling point at normal pressure. After being ejected from the nozzle, the water with high temperature and high pressure instantly vaporizes at normal pressure, forming steam. The steam is ejected from the nozzle to form a high-speed jet containing steam (e.g., with a jet velocity of 90-110 m/s) that impacts the high-temperature molten liquid molten slag flowing out from the slag chute. The high-speed jet cools the liquid molten slag and breaks it into small particles that fall into the bottom of the molten slag granulator body. The mixed jet ejected from the nozzle completely turns into steam after impacting the high-temperature molten slag and flows out from above the apparatus as a waste heat recovery resource.

Preferably, the first control valve is an electro-hydraulic gate valve.

Preferably, the water entering the pipeline is pressurized by a water pump, raising a pressure inside the pipeline to 0.1-1 MPa; the heat source from the waste heat recovery pipeline raises a temperature of water inside the heat exchanger to 100-182°C.

According to another embodiment of the present invention, an apparatus for the aforementioned horizontal molten slag granulation process with gas-water mixing is provided, comprising:
a molten slag granulator body, which is a box structure, and a slag flow inlet is arranged on the top of the molten slag granulator body;
a high-speed air jet mechanism, comprising:
   a compressor, a gas storage tank, a gas transmission pipeline connected to the gas storage tank, and an air nozzle array component connected to one end of the gas transmission pipeline; a first control valve and a flowmeter are sequentially arranged on the gas transmission pipeline at an outlet end of the gas storage tank;
   wherein a pressure gauge, a gas inlet pipe, and a gas inlet valve are arranged on the gas storage tank; and
   wherein the air nozzle array component comprises multiple airflow nozzles and corresponding branch pipelines, and the branch pipeline are connected to the gas transmission pipeline; the airflow nozzle is arranged on upper part of one side-wall of the molten slag granulator body;
   a spray mechanism, comprising: a second control valve, a water pump, a third control valve, a pressure gauge, a flowmeter, and multiple gas-liquid dual-fluid nozzles arranged in sequence along a water transmission pipeline; an inlet end of the water transmission pipeline is connected to a water source; the gas-liquid dual-fluid nozzles are arranged at the upper part and the bottom of the inner side of the molten slag granulator body, and the gas-liquid dual-fluid nozzles are connected to the gas transmission pipeline and the water transmission pipeline through connecting pipelines.

Preferably, an angle of 0-20° is formed between the axial direction of the air nozzle array component and the horizontal direction.

Preferably, a width of the air nozzle array component is greater than a width of the slag flow inlet.

Preferably, the second control valve is an electro-hydraulic gate valve.

Preferably, the molten slag granulator body is semi-closed, and a slag granule collection section is arranged at the rear part of the molten slag granulator body.

Preferably, the airflow nozzle is a supersonic nozzle.

In the apparatus for the horizontal molten slag granulation process with gas-water mixing described above:
The high-speed air jet mechanism provides the main power for molten slag crushing and granulation, while the spray mechanism provides the main heat exchange medium for molten slag crushing and granulation. The molten slag granulation process takes place inside the molten slag granulator body.

The compressor pressurizes the gas and sends the gas into the storage tank, providing gas at a stable pressure to the air nozzle array component through the storage tank. Then, high-speed airflow (for example, with a jet velocity of 90-110 m/s) is injected into the molten slag granulator body to crush the molten slag. At the same time, the water pump pressurizes the water in the water transmission pipeline, which is sprayed together with the airflow from the gas pipeline through the gas-liquid dual-fluid nozzles. The sprayed mist droplets impact the granulated molten slag granules, rapidly cooling and solidifying the molten slag granules into stable small particles.

According to another embodiment of the present invention, an apparatus for granulating blast furnace molten slag using a gas nozzle array is provided, comprising:
a molten slag granulator body, which is a box structure, and a slag flow inlet and a steam outlet passage are arranged on the top of the molten slag granulator body;
a high-speed air jet mechanism, comprising:
   a compressor, a gas storage tank, a gas transmission pipeline connected to a gas storage tank, and a nozzle array connected to one end of a gas transmission pipeline; wherein a first control valve and a flowmeter are sequentially arranged in the gas transmission pipeline at an outlet end of the gas storage tank; and a pressure gauge, a gas inlet pipe, and a gas inlet valve are arranged on the gas storage tank;
   wherein the nozzle array comprises multiple nozzles and corresponding branch pipelines, each branch pipeline is respectively connected to the gas transmission pipeline; the nozzles are arranged on one side-wall of the molten slag granulator body.

Preferably, the above-mentioned apparatus further comprises:
a nozzle atomization mechanism, comprising a second control valve, a water pump, a third control valve, a pressure gauge, a flowmeter, and multiple atomization nozzles arranged in sequence along a water transmission pipeline; an inlet end of the water transmission pipeline is connected to a water source; the atomization nozzles are arranged at the inner bottom of the molten slag granulator body and arranged in at least two rows, with a spraying direction facing the molten slag flowing in from the slag flow inlet.

Preferably, the above-mentioned apparatus further comprises a waste heat recovery system, which comprises:
a heat exchange box, a feed inlet connected to a discharge outlet of the molten slag granulator body is arranged on the upper part of one side-wall of the heat exchange box; a heat exchange gas flow outlet is arranged on the top of the heat exchange box; multiple perforated bed plates are arranged along a height direction inside the heat exchange box; a molten slag granule outlet is arranged at the bottom of the heat exchange box;
a gas nozzle array, which is arranged at the inner bottom of the heat exchange box, below the perforated bed plate, the gas nozzles in the gas nozzle array are arranged opposite to the perforated bed plate; or,
the waste heat recovery system adopts a cyclone separator.

Preferably, the perforated bed plates are arranged in a zigzag pattern along the vertical direction inside the heat exchange box.

Preferably, the cyclone separator comprises a separator body, and a gas-solid medium inlet connected to the discharge outlet of the molten slag granulator body is arranged on an upper part of one side of the separator body; an air outlet is arranged on the top of the separator body, and a dust hopper is arranged at the bottom of the separator body.

Preferably, the nozzles in the nozzle array are one or more selected from supersonic nozzles, atomization nozzles, or gas-liquid dual-fluid nozzles; preferably, the axial direction of the nozzles in the nozzle array is perpendicular to a side-wall of the molten slag granulator body.

Preferably, the nozzles in the nozzle array is arranged in multiple rows and columns, or in an arc shape; preferably, the nozzles in adjacent rows are staggered in the vertical direction; more preferably, the number of nozzles is gradually decreased or increased along the vertical direction.

Preferably, the nozzles in the nozzle array are gas-liquid dual-fluid nozzles; correspondingly, the apparatus is also installed with a nozzle water supply mechanism, and the nozzle water supply mechanism comprises a fourth control valve, a water pump, a fifth control valve, a pressure gauge, and a flowmeter arranged in sequence along the water transmission pipeline; an inlet end of the water transmission pipeline is connected to a water source, and an outlet end is connected to an inlet end of the gas-liquid dual-fluid nozzles.

The compressor pressurizes the air and sends it to the air storage tank, which then directs the air through pipelines and (supersonic) nozzles into the molten slag granulator body for granulation. The liquid molten slag is granulated inside the granulation body. The liquid molten slag is impacted and crushed by the high-speed airflow (for example, with a jet velocity of 90-110 m/s or more) ejected by the supersonic nozzle, rapidly heat-exchanging and cooling the granulated slag granules to facilitate fast slag formation.

Compared to traditional air quenching and water quenching processes, the apparatus in the present embodiment adopts a supersonic nozzle array to further improve the slag processing capacity, enhances the heat exchange effect of slag granules through mist droplet spraying, and reduces water resource waste.

According to another embodiment of the present invention, the apparatus is an apparatus capable of cleaning falling slag and granulating the slag by mist, comprising:
a molten slag granulator body, the molten slag granulator body is a box structure, a slag flow inlet is arranged on the top of the molten slag granulator body and a slag granule collection section is arranged at the tail of the molten slag granulator body;
a gas nozzle array, arranged on one side-wall of the molten slag granulator body;
an atomization nozzle array, arranged at the inner bottom of the molten slag granulator body, with the spray direction facing the molten slag flowing in from the slag flow inlet;
a residual slag cleaning nozzle, arranged at the inner bottom of the molten slag granulator body, an outlet of the residual slag cleaning nozzle facing the inner bottom of the molten slag granulator body and the slag granule collection section.

Preferably, the axial direction of the gas nozzle array is perpendicular to one side-wall of the molten slag granulator body.

Preferably, baffles are arranged on both sides of an outlet of the gas nozzle array, and the outer sides of the baffles are installed with liquid/atomization nozzles.

Preferably, the residual slag cleaning nozzle is one or more selected from water atomization nozzles, steam atomization nozzles, high-speed gas flow nozzles, or gas-liquid dual-fluid nozzles.

In the apparatus above-mentioned further comprises:
a high-speed air jet mechanism, comprising a compressor, a gas storage tank, a gas transmission pipeline connected to the gas storage tank, and a gas nozzle array connected to one end of the gas transmission pipeline; a first control valve and a flowmeter are sequentially arranged on the gas transmission pipeline connected to an outlet end of the gas storage tank; a pressure gauge, a gas inlet pipe, and a gas inlet valve are arranged on the gas storage tank; the nozzle array comprises multiple nozzles and corresponding branch pipelines, the branch pipelines are connected to the gas transmission pipeline; the residual slag cleaning nozzle is connected to the gas transmission pipeline through a connecting pipeline and a valve;
a nozzle atomization mechanism, comprising a second control valve, a water pump, a third control valve, a pressure gauge, and a flowmeter arranged in sequence along a water transmission pipeline; an inlet end of the water transmission pipeline is connected to a water source, and an outlet end of the water transmission pipeline is connected to the atomization nozzle array.

Preferably, the nozzles in the atomization nozzle array are gas-liquid dual-fluid nozzles, whose inlet ends are respectively connected to the gas transmission pipeline and the water transmission pipeline.

Preferably, at least two slag flow inlets are arranged on the top of the molten slag granulator body.

The apparatus capable of cleaning falling slag and granulating the slag by mist of the present embodiment comprises a molten slag granulation system and a slag granule collection system.

The molten slag granulation system is divided into two parts. One part is a gas nozzle array component, which ejects a high-speed gas flow (for example, with a jet velocity of 90-110 m/s) for granulation. The other part is the atomization nozzle array, which ejects mist droplets for granulation inside the molten slag granulation apparatus. The liquid molten slag is impacted and crushed by the high-speed gas flow ejected from the gas nozzle array. The high-density mist droplets ejected from the atomization nozzle array rapidly exchange heat with the crushed slag, facilitating quick slag formation.

A residual slag cleaning nozzle is arranged at the bottom of the molten slag granulator body, which can cool and blow the slag granules at the bottom to the tail slag granule collection section to prevent the molten slag granules from sticking to the wall and fall into the slag granule collection section quickly.

Compared to the traditional air quenching and water quenching processes, the gas nozzle array is used to further improve the slag processing capacity. At the same time, the atomization nozzle array is used to spray the mist, which improves the heat exchange effect of the slag granules, reduces water resource waste, and ensures the molten slag granules do not stick to the wall and fall into the collection section quickly.

According to another embodiment of the present invention, an apparatus for rapidly cooling molten slag using an atomization nozzle is provided, comprising:
a molten slag granulator body, which is a box structure, and a slag flow inlet is arranged on the top of the molten slag granulator body;
a gas nozzle array, arranged on one side-wall of the molten slag granulator body, and the axial direction of gas nozzles in the gas nozzle array is perpendicular to the side-wall of the molten slag granulator body;
a flow field optimization nozzle array, arranged at the inner upper part of the molten slag granulator body, near the slag flow inlet;
a slag cleaning nozzle array, arranged at the lower part or bottom inside the molten slag granulator body;
an atomization nozzle array, arranged inside the molten slag granulator body, radially arranged around the slag flow on the inner wall of the molten slag granulator body, wherein the axial direction of the atomization nozzle in the atomization nozzle array is perpendicular to the axial direction of the gas nozzle.

Preferably, a slag granule collection section is arranged at the tail of the molten slag granulator body.

Preferably, the nozzles of the flow field optimization nozzle array are gas nozzles or gas-liquid dual-fluid nozzles.

Preferably, the nozzles of the slag cleaning nozzle array are gas nozzles.

Preferably, the nozzles of the atomization nozzle array are water atomization nozzles.

Compared to traditional air quenching and water quenching processes, the apparatus in the present embodiment adopts a nozzle array to further improve the slag processing capacity, enhance the heat exchange effect of slag granules through mist droplet spraying, reduce water resource waste, and fully recover slag waste heat.

According to another embodiment of the present invention, a water mist granulation apparatus for blast furnace molten slag granulation is provided, comprising:
a rack, which is a frame structure;
a water nozzle array component, comprising:
   a body, which is a box structure, and arranged in the middle of the rack, provided with a flow equalization plate and a flow guide plate at intervals in sequence inside it; wherein the rear end of the body is connected to a water source;
   a water nozzle array, uniformly arranged on the front surface of the body;
a gas-liquid dual-fluid nozzle component, comprising:
   gas-liquid dual-fluid nozzles, arranged in parallel on both sides of the water nozzle array and fixed on the rack;
   a gas pipeline and a water transmission pipeline, both fixed on the rack and connected to the gas-liquid dual-fluid nozzles.

Preferably, the gas-liquid dual-fluid nozzles are arranged in parallel on both sides of the water nozzle array.

### BRIEF DESCRIPTION OF THE DRAWINGS

Figure 1 shows a schematic structural diagram of a molten slag granulation apparatus according to an example of the present invention;
Figure 2 shows a schematic structural diagram of a molten slag granulation apparatus according to another example of the present invention;
Figure 3 shows a schematic structural diagram of a molten slag granulation apparatus according to another example of the present invention;
Figure 4 shows a schematic structural diagram of a molten slag granulation apparatus according to another example of the present invention;
Figure 5 shows a schematic structural diagram of a gas nozzle array component in another example of the present invention;
Figure 6 shows the flight trajectory of slag granules when the apparatus in Figure 4 adopts different gas nozzle array components at different inclination angle;
Figure 7 shows the flight trajectory of slag granules when the inclination angle of the gas nozzle array component used is too large in the apparatus of Figure 4;
Figure 8 shows a schematic structural diagram of a molten slag granulation apparatus according to another example of the present invention;
Figure 9 shows a schematic arrangement diagram of a nozzle array in a molten slag granulation apparatus according to another example of the present invention;
Figure 10 shows a schematic arrangement diagram of a nozzle array in a molten slag granulation apparatus according to another example of the present invention;
Figure 11 shows a schematic arrangement diagram of a nozzle array in a molten slag granulation apparatus according to another example of the present invention;
Figure 12 shows a schematic structural diagram of a molten slag granulation apparatus according to another example of the present invention;
Figure 13 shows a top view of a nozzle array in a molten slag granulation apparatus according to another example of the present invention;
Figure 14 shows a schematic structural diagram of a molten slag granulation apparatus according to another example of the present invention;
Figure 15 shows a schematic structural diagram of a molten slag granulation apparatus according to another example of the present invention;
Figure 16 shows a schematic structural diagram of a molten slag granulation apparatus according to another example of the present invention;
Figure 17 shows a schematic structural diagram of a molten slag granulation apparatus according to another example of the present invention;
Figure 18 shows a schematic arrangement diagram of the slag cleaning nozzles in a molten slag granulation apparatus according to another example of the present invention;
Figure 19 shows a schematic structural diagram of a molten slag granulation apparatus according to another example of the present invention;
Figure 20 shows a schematic structural diagram of a molten slag granulation apparatus according to another example of the present invention;
Figure 21 shows a top view of a gas nozzle array in a molten slag granulation apparatus according to another example of the present invention;
Figure 22 shows a schematic structural diagram of nozzles in a gas nozzle array of a molten slag granulation apparatus according to another example of the present invention;
Figure 23 shows another schematic structural diagram of a gas nozzle array in a molten slag granulation apparatus according to another example of the present invention;
Figure 24 shows a schematic structural diagram of a molten slag granulation apparatus according to another example of the present invention;
Figure 25 shows a schematic arrangement diagram of atomization nozzles in Figure 24;
Figure 26 shows a schematic structural diagram of a molten slag granulation apparatus according to another example of the present invention;
Figure 27 shows a side view of the molten slag granulation apparatus in Figure 26.

### DETAILED DESCRIPTION

The embodiments of the present invention are illustrated by following particular specific examples. Those skilled in the art can easily understand other advantages and effects of the present invention from the disclosed content in the specification. Although the description of the present invention will be introduced in conjunction with the preferred embodiments, it does not mean that the features of the invention are limited to these embodiments. On the contrary, the objective of the invention introduction combined with the implementation is to cover other options or modifications that may be extended based on the claims of the present invention. To provide an in-depth understanding of the present invention, many specific details will be included in the following description. The present invention can also be implemented without the use of these details. In addition, to avoid confusion or obscuring the focus of the invention, some specific details will be omitted in the description. It should be noted that the features in embodiments and examples of the present invention may be combined with each other without conflict.

In the specification, it should be noted that similar reference numerals and letters represent similar items in the following drawings. Therefore, once an item is defined in one drawing, it does not need to be further defined and explained in subsequent drawings.

In the description of the embodiments, it is noted that an orientation or positional relationship indicated by the terms "upper", "lower", "inner", "bottom" etc., indicate the orientation or positional relationship based on the orientation or positional relationship shown in the drawings, or the customary orientation or positional relationship when the product of the invention is used. These terms are only for the purpose of facilitating the description of the present invention and simplifying the description, and not intend to indicate or imply that the referred device or element must have a specific orientation, be constructed and operated with a specific orientation, therefore cannot be understood as a limitation of the present invention.

Terms such as "first", "second", etc., are used only to distinguish the description and should not be understood as indicating or implying relative importance.

In the description of the embodiments, it should also be noted that, unless otherwise explicitly specified and defined, the terms "set", "linked", and "connected" should be a broad understanding, and for example may be a fixed connection, a detachable connection, or an integrated connection. It may be a mechanical connection or an electrical connection. It may be a direct connection or an indirect connection through an intermediate medium. It may be an internal connection between two elements. For those skilled in the art, the specific meanings of the above terms in the embodiments can be understood based on specific context.

To make the objectives, technical solutions, and advantages of the present invention clearer, the embodiments of the present invention will be further described in detail below in conjunction with the accompanying drawings.

Firstly, the present invention provides a molten slag granulation method, comprising crushing molten slag to obtain molten slag granules, then cooling the molten slag granules, and collecting the resulting granulated slag.

Secondly, the present invention provides a molten slag granulation apparatus, comprising: a granulation mechanism for granulating molten slag to obtain crushed molten slag granules; and a cooling mechanism for cooling the molten slag granules to obtain granulated slag.

According to another embodiment of the present invention, a method for coupled utilization of molten slag waste heat recovery is provided, wherein the molten slag is granulated by jet granulation to obtain surface-solidified granules and steam, then the surface-solidified granules are cooled in a swirl flow field to obtain solid slag granules. The method provided in the present embodiment not only achieves rapid and safe granulation of blast furnace molten slag but also realizes multi-grade recovery and same-grade utilization of the sensible heat of blast furnace molten slag, thus greatly improving the recovery rate of waste heat from high temperature molten slag. By recovering steam as a power source, the granulated slag is directly ground into ultrafine slag micropowder, achieving high value productization of the blast furnace molten slag.

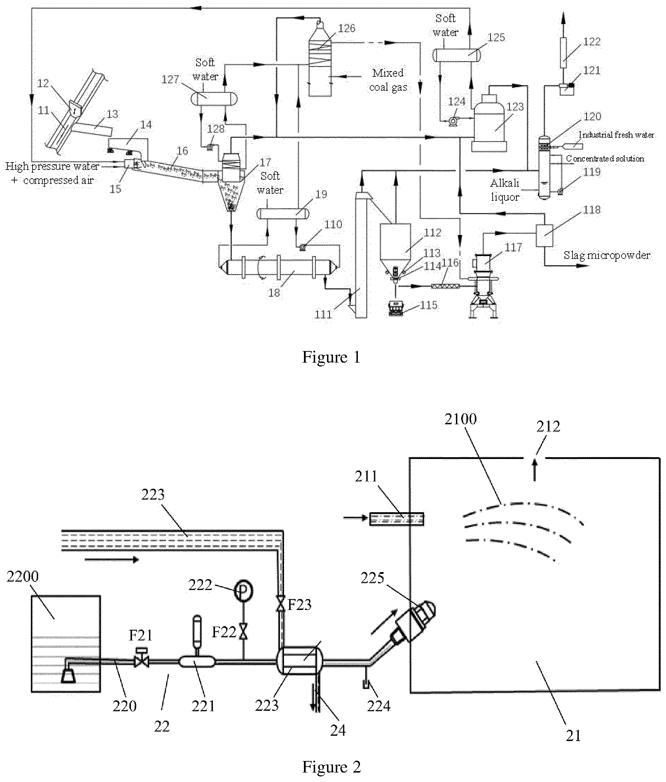

Referring to Figure 1, it shows an apparatus for implementing the molten slag granulation method according to the present embodiment. Specifically, the present embodiment provides an apparatus for the above-mentioned method of coupled utilization of molten slag waste heat recovery, comprising:
a flow guiding cover 16, which is a cylindrical structure; preferably, its cross-section is rectangular with an aspect ratio of 2:1 to 5:1; more preferably, an online weighing device 14 is arranged at an inlet end of the flow guiding cover 16;
a granulator 15, an outlet end of the granulator is connected to the inlet end of the flow guiding cover 16;
a cyclone separator 17, a material inlet is arranged on a side-wall of the cyclone separator and a material outlet is arranged at the bottom of the cyclone separator; the material inlet is connected to an outlet end of the flow guiding cover 16,
an overflow pipeline, a lower part of the overflow pipeline is vertically inserted into a cyclone separator 17, and a spiral heat exchange pipeline is arranged inside the overflow pipeline;
a first steam-water separator 127, a cooling water inlet, a cooling water outlet, a steam inlet, and a steam outlet are arranged on the first steam-water separator; the cooling water inlet is connected to a cooling water pipeline, the cooling water outlet is connected to an inlet end of a spiral heat exchange pipeline inside the overflow pipeline through a pipeline and a water pump 128, and the steam inlet is connected to an outlet end of the spiral heat exchange pipeline inside the overflow pipeline,
a waste heat recovery device 123, a gas inlet and a gas outlet are arranged on a shell of the waste heat recovery device, and a heat exchange pipeline is arranged inside the waste heat recovery device, and the gas inlet is connected to an outlet end of the overflow pipeline;
a second steam-water separator 125, a cooling water inlet, a cooling water outlet, a steam inlet, and a steam outlet are arranged on the second steam-water separator; the cooling water inlet is connected to a cooling water pipeline, the cooling water outlet is connected to an inlet end of an heat exchange pipeline in the waste heat recovery device 123 through a pipeline and a water pump 124, the steam inlet is connected to an outlet end of the heat exchange pipeline inside the waste heat recovery device 123 through a pipeline, and the steam outlet is connected to an inlet end of the granulator 15 through a pipeline;
a rotary bed 18, the rotary bed is a cylindrical structure, a heat exchange pipeline is arranged inside the rotary bed, an inlet end of the rotary bed 18 is connected to a material outlet of the cyclone separator 17, an outlet end of the rotary bed 18 is connected to an slag bin 112, and pushing the rotary bed is equipped with a pushing device to rotate it;
a third steam-water separator 19, a cooling water inlet, a cooling water outlet, a steam inlet, and a steam outlet are arranged on the third steam-water separator; the cooling water inlet is connected to a cooling water pipeline, the cooling water outlet is connected to the inlet end of the heat exchange pipeline inside the rotary bed through a pipeline and a water pump 110, and the steam inlet is connected to the outlet end of the heat exchange pipeline of the rotary bed;
a gas jet mill 117, a feed pipe, a gas inlet pipe, and a gas outlet pipe are arranged on a shell of the gas jet mill, the feed pipe of the gas jet mill 117 is connected to a slag bin 112, and the gas outlet pipe of the gas jet mill 117 is connected to a gas inlet of the waste heat recovery device 123;
a superheated steam generator 126, a gas inlet pipe and a gas outlet pipe are arranged on a shell of the superheated steam generator, the gas inlet pipe of the superheated steam generator 126 is connected to the steam outlet of the first steam-water separator 127 and the steam outlet of the third steam-water separator 19, and the gas outlet pipe of the superheated steam generator 126 is connected to the gas inlet pipe of the gas jet mill 117.

Preferably, a vibrator 13 is arranged on the slag bin 112.

Continuing to refer to Figure 1, the method for coupled utilization of slag waste heat recovery can be carried out as follows. Specifically, the method for coupled utilization of slag waste heat recovery comprises the following steps:
1) In a steel plant with a blast furnace having a volume of 1250 m³, during iron tapping, molten slag with a temperature of around 1500°C enters a main slag groove 11 at an average rate of about 2.5 ton/min (maximum slag discharge rate of 5 ton/min). The molten slag in the main slag groove 11 is then transferred into a slag extraction groove 13 by a slag extractor 12, and then flows into the flow guiding cover 16 through the online weighing device 14. Wherein the cross-section of the flow guiding cover 16 is rectangular, with a length of 300 mm and a width of 100 mm; the molten slag entering the flow guiding cover 16 is impacted, crushed, and granulated into granulated molten droplets with a particle size of 5 mm or less by the mist fluid ejected from the granulator 15. The granulated molten droplets fly at high speed along the flow guiding cove 16 with the mist fluid, exchanging heat with the mist fluid during formation and flight and rapidly cooling and solidifying, for example, at a cooling rate of 20°C/s or more, generating granulated slag of 1000°C or less and 800°C or more (at this stage, slag particles are only surface solidified, with a molten core) and a gas flow of about 300°C (ambient temperature). At this stage, the solidification rate of particles with a particle size of 2 mm or less is about 80%, achieving granulation and cooling solidification of the molten slag;
2) Slag gas separation
   The above-mentioned granulated slag and gas flow directly enter the cyclone separator 17 after exiting the flow guiding cover 16. Under the combined action of centrifugal force and gravity, the separation of slag and gas are achieved, and a temperature of the granulated slag falls to 700-800°C after the separation, exiting from the bottom of the cyclone separator 17;
   The separated gas flow passes through the cyclone separator 17 and the overflow pipeline, the temperature falls to 150°C or less after heat exchange with cooling water in the spiral heat exchange pipeline inside the overflow pipeline; after exiting the cyclone separator 17 and overflow pipeline, the gas enters the waste heat recovery device 123, where it further exchanges heat with the heat exchange pipeline carrying cooling water to further recover waste heat, forming exhaust gas at 130°C or less;
   The cooling water in the heat exchange pipeline of the waste heat recovery device 123 absorbs heat and vaporizes; after steam-water separation in the second steam-water separator 125, saturated steam with a pressure of about 0.5 MPa is obtained, which is returned to the granulator 15 as a mist fluid for granulating the above-mentioned molten slag;
   The cooling water inside the spiral heat exchange pipeline absorbs heat and vaporizes; after steam-eater separation in the first steam water separator 127, saturated steam with a pressure of 1.2-1.6 MPa and a temperature of 188-201°C is generated. This saturated steam enters the superheated steam generator 126 and is further heated to obtain superheated steam with a pressure of 1.2-1.6 MPa and a temperature of 250-350°C; during the above process, the saturated steam entering the superheated steam generator 126 is further heated by the mixed coal gas generated during steel smelting or natural gas;
3) The granulated slag exiting the bottom of the cyclone separator 17 enters the rotary bed 18, where it contacts and exchanges heat with the heat exchange pipeline carrying cooling water. The rotary bed 18 rotates at a low speed (of 3 rpm) along the set direction under the action of the pushing mechanism. The granulated slag is slowly pushed forward by the pushing mechanism inside the rotary bed 18; the slag is discharged from the rotary bed 18 after cooling to 180°C or less and then sent to the slag bin 112 for storage through a chute and bucket elevator 111 in sequence; a vibrator 113 is installed on the slag bin 112 for vibrating the slag bin 12, preventing granulated slag from clogging the slag bin outlet, bridging, or arching in the slag bin;
   The cooling water in the heat exchange pipeline of the rotary bed 8 absorbs heat and vaporizes after steam-water separation in the third steam-water separator 19, saturated steam with a pressure of 1.2-1.6 MPa and a temperature of 188-201°C is generated. The saturated steam enters the superheated steam generator 126, and is further heated using natural gas or mixed coal gas generated during steel smelting to obtain superheated steam with a pressure of 1.2-1.6 MPa and a temperature of 250-350°C;
4) The granulated slag in the slag bin 112 passes through a slag discharge valve 114 and a conveying mechanism 116 to be transported into the gas jet mill 117, and is impact and grind into ultrafine micropowder by the superheated steam obtained in steps 2) and 3); the ultrafine micropowder is collected by a powder collection device 118 and sold directly as a high-quality product;
   The pressure of the superheated steam falls to atmospheric pressure, and the temperature of the superheated steam drops to 150°C or less; the steam then enters the waste heat recovery device 123 where it further exchanges heat with heat exchange pipeline carrying cooling water to further recover waste heat, forming exhaust gas with a temperature of about 130°C;
   The cooling water in the heat exchange pipeline of the waste heat recovery device 123 absorbs heat and vaporizes; after steam-water separation in the second steam water separator 125, saturated steam with a pressure of about 0.4 MPa is obtained, which is returned to the granulator 15 as a mist fluid for granulating molten slag.

Alternatively, the granulated slag in the slag bin 112 is transported to the slag micropowder production line by truck 115 and directly ground into slag micropowder with a specific surface area of about 420 m²/kg.

The exhaust gas generated during the production process is sent to the exhaust gas purification device 120, where it undergoes dust removal and desulfurization treatment to meet relevant emission standards. It is then extracted by a fan 121 and discharged through a chimney 122. The desulfurization and dust removal solution are pumped cyclically into the exhaust gas purification device 120 by a circulation pump 119. When the concentration of the circulating solution reaches a certain value (depending on the actual treatment scenario), part of it is discharged, and fresh alkali solution is supplemented from outside to maintain normal and efficient effects of desulfurization and dust removal.

According to another embodiment of the present invention, the method for coupled utilization of slag waste heat recovery by using the apparatus shown in Figure 1 can be carried out as follows. The method for coupled utilization of slag waste heat recovery comprises the following steps:
1) In a steel plant with a blast furnace having a volume of 2500 m³, during iron tapping, molten slag with a temperature of around 1500°C enters a main slag groove 11 at an average rate of about 3 ton/min (maximum slag discharge rate of 6 ton/min). The molten slag in the main slag groove 11 is then transferred into a slag extraction groove 13 by a slag extractor 12 and then flows into the flow guiding cover through the online weighing device. Wherein the cross-section of the flow guiding cover 16 is rectangular, with a length of 400 mm and a width of 100 mm; the molten slag entering the flow guiding cover 16 is impacted, crushed, and granulated into granulated molten droplets with a particle size of 5 mm or less by the mist fluid ejected from the granulator 15. The granulated molten droplets fly at high speed along the flow guiding cove 16 with the mist fluid, exchanging heat with the mist fluid during formation and flight and rapidly cooling and solidifying, for example, at a cooling rate of 20°C/s or more, generating granulated slag of 1000°C or less and 750°C or more (at this stage, slag particles are only surface solidified, with a molten core) and a gas flow of about 300°C (ambient temperature). At this stage, the solidification rate of particles with a particle size of 2 mm or less is about 90%, achieving granulation and cooling solidification of the molten slag;
2) Slag gas separation
   The above-mentioned granulated slag and gas flow directly enter the cyclone separator 17 after exiting the flow guiding cover 16. Under the combined action of centrifugal force and gravity, the separation of slag and gas are achieved, and a temperature of the granulated slag falls to 750°C or less after the separation, exiting from the bottom of the cyclone separator 17;
   The separated gas flow passes through the cyclone separator 17 and the overflow pipeline, the temperature falls to 200°C or less after heat exchange with cooling water in the spiral heat exchange pipeline inside the overflow pipeline; after exiting the cyclone separator 17 and overflow pipeline, the gas enters the waste heat recovery device 123, where it further exchanges heat with the heat exchange pipeline carrying cooling water to further recover waste heat, forming exhaust gas at 140°C or less;
   The cooling water in the heat exchange pipeline of the waste heat recovery device 123 absorbs heat and vaporizes; after steam-water separation in the second steam-water separator 125, saturated steam with a pressure of about 0.45 MPa is obtained, which is returned to the granulator 15 as a mist fluid for granulating the above-mentioned molten slag;
   The cooling water inside the spiral heat exchange pipeline absorbs heat and vaporizes; after steam-water separation in the first steam water separator 127, saturated steam with a pressure of about 1.4 MPa and a temperature of about 190°C is generated. This saturated steam enters the superheated steam generator 126 and is further heated to obtain superheated steam with a pressure of about 1.4 MPa and a temperature of about 300°C; during the above process, the saturated steam entering the superheated steam generator 126 is further heated by the mixed coal gas generated during steel smelting or natural gas;
3) The granulated slag exiting the bottom of the cyclone separator 17 enters the rotary bed 18, where it contacts and exchanges heat with the heat exchange pipeline carrying cooling water. The rotary bed 18 rotates at a low speed (of 3 rpm) along the set direction under the action of the pushing mechanism. The granulated slag is slowly pushed forward by the pushing mechanism inside the rotary bed 18; the slag is discharged from the rotary bed 18 after cooling to 180°C or less and then sent to the slag bin 112 for storage through a chute and bucket elevator 111 in sequence; a vibrator 113 is installed on the slag bin 112 for vibrating the slag bin 112, preventing granulated slag from clogging the slag bin outlet, bridging, or arching in the slag bin 112;
   The cooling water in the heat exchange pipeline of the rotary bed 18 absorbs heat and vaporizes, after steam-water separation in the third steam-water separator 19, a saturated steam with a pressure of about 1.4 MPa and a temperature of about 190°C is generated. The saturated steam enters the superheated steam generator 126, and is further heated using natural gas or mixed coal gas generated during steel smelting to obtain superheated steam with a pressure of about 1.4 MPa and a temperature of about 300°C;
4) The granulated slag in the slag bin 112 passes through the slag discharge valve 114 and the conveying mechanism 116 to be transported into the gas jet mill 117 and is impact and grind into ultrafine micropowder by the superheated steam obtained in steps 2) and 3). The ultrafine micropowder is collected by the powder collection device 118 and sold directly as a high-quality product;
   The pressure of the superheated steam falls to atmospheric pressure, and the temperature of the superheated steam falls to 200°C or less; the steam enters the waste heat recovery device 123 where it further exchanges heat with the heat exchange pipeline carrying cooling water to further recover waste heat, forming exhaust gas with a temperature of about 140°C;
   The cooling water in the heat exchange pipeline of the waste heat recovery device 123 absorbs heat and vaporizes; after steam-water separation in the second steam water separator 125, saturated steam with a pressure of about 0.45 MPa is obtained, which is returned to the granulator 15 as a mist fluid for granulating molten slag.

Alternatively, the granulated slag in the slag bin 112 is transported to the slag micropowder production line by truck 115 and directly ground into slag micro powder with a specific surface area of about 420 m²/kg.

The exhaust gas generated during the production process is sent to the exhaust gas purification device 120, where it undergoes dust removal and desulfurization treatment to meet relevant emission standards, being extracted by the fan 121 and discharged through the chimney 122. The desulfurization and dust removal solution are pumped cyclically into the exhaust gas purification device 120 by a circulation pump 119. When the concentration of the circulating solution reaches a certain value (depending on the actual treatment scenario), part of it is discharged, and fresh alkali solution is supplemented from outside to maintain normal and efficient effects of desulfurization and dust removal.

According to another embodiment of the present invention, the method for coupled utilization of slag waste heat recovery by using the apparatus shown in Figure 1 can be carried out as follows. The method for coupled utilization of slag waste heat recovery comprises the following steps:
1) In a steel plant with a blast furnace having a volume of 1250 m³, during iron tapping, molten slag with a temperature of around 1500°C enters a main slag groove 11 at an average rate of about 3 ton/min (maximum slag discharge rate of 6 ton/min). The molten slag in the main slag groove 11 is then transferred into a slag extraction groove 13 by a slag extractor 12 and then flows into the flow guiding cover 16 through the online weighing device 14. Wherein the cross-section of the flow guiding cover 16 is rectangular, with a length of 400 mm and a width of 100 mm; the molten slag entering the flow guiding cover 16 is impacted, crushed, and granulated into granulated molten dropletswith a particle size of 5 mm or less by the mist fluid ejected from the granulator 15. The granulated molten droplets fly at high speed (for example, at 10 m/s or more, determined according to the actual situation) along the flow guiding cover 16 with the mist fluid, exchanging heat with the mist fluid during formation and flight and rapidly cooling and solidifying, generating granulated slag of 1000°C or less and 800°C or more (at this stage, slag particles are only surface solidified, with a molten stage) and a gas flow of about 300°C (ambient temperature). At this stage, the solidification rate of particles with a particle size of 2 mm or less is about 85%, achieving granulation and cooling solidification of the molten slag;
2) Slag gas separation
   The above-mentioned granulated slag and gas flow directly enter the cyclone separator 17 after exiting the flow guiding cover 16. Under the combined action of centrifugal force and gravity, the separation of slag and gas are achieved, and a temperature of the granulated slag falls to 800°C or less after the separation, exiting from the bottom of the cyclone separator 17;
   The separated gas flow passes through the cyclone separator 17 and the overflow pipeline, the temperature falls to 300°C or less after heat exchange with cooling water in the spiral heat exchange pipeline inside the overflow pipeline; after exiting the cyclone separator 17 and overflow pipeline, the gas enters the waste heat recovery device 123, where it further exchanges heat with the heat exchange pipeline carrying cooling water to further recover waste heat, forming exhaust gas with a temperature of 150°C or less;
   The cooling water in the heat exchange pipeline of the waste heat recovery device 123 absorbs heat and vaporizes; after steam-water separation in the second steam-water separator 125 to obtain saturated steam with a pressure of about 0.5 MPa is obtained, which is returned to the granulator 15 as a mist fluid for granulating the above-mentioned molten slag;
   The cooling water inside the spiral heat exchange pipeline absorbs heat and vaporizes; after steam-water separation in the first steam water separator 127, saturated steam with a pressure of about 1.6 MPa and a temperature of about 201°C is generated. This saturated steam enters the superheated steam generator 126 and is further heated to obtain superheated steam with a pressure of about 1.6 MPa and a temperature of about 350°C; during the above process, the saturated steam entering the superheated steam generator 126 is further heated by the mixed coal gas generated during steel smelting or natural gas;
3) The granulated slag exiting the bottom of the cyclone separator 17 enters the rotary bed 18, where it contacts and exchanges heat with the heat exchange pipeline carrying cooling water. The rotary bed 18 rotates at a low speed (of 3 rpm) along the set direction under the action of the pushing mechanism. The granulated slag is slowly pushed forward by the pushing mechanism inside the rotary bed 18; the slag is discharged from the rotary bed 18 after cooling to 180°C or less, and then sent to the slag bin 112 for storage through a chute and bucket elevator 111 in sequence; a vibrator 113 is installed on the slag bin 112 for vibrating the slag bin 112, preventing granulated slag from clogging the slag bin outlet, bridging, or arching in the slag bin 112;
   The cooling water in the heat exchange pipeline of the rotary bed 18 absorbs heat and vaporizes, after steam-water separation in the third steam-water separator 19, saturated steam with a pressure of about 1.6 MPa and a temperature of about 201°C is obtained. The saturated steam enters the superheated steam generator 126, and is further heated using natural gas or mixed coal gas generated during steel smelting to obtain superheated steam with a pressure of about 1.6 MPa and a temperature of about 350°C;
4) The granulated slag in the slag bin 112 passes through the slag discharge valve 114 and the conveying mechanism 116 to be transported into the gas jet mill 117 and is impact and grind into ultrafine micropowder by the superheated steam obtained in steps 2) and 3). The ultrafine micropowder is collected by the powder collection device 118 and sold directly as a high-quality product;
   The pressure of the superheated steam falls to atmospheric pressure, the temperature of the superheated steam falls to 250°C or less; the steam enters the waste heat recovery device 123 where it further exchanges heat with the heat exchange pipeline carrying cooling water to further recover waste heat, forming exhaust gas with a temperature of about 150°C;
   The cooling water in the heat exchange pipeline of the waste heat recovery device 123 absorbs heat and vaporizes; after steam-water separation in the second steam water separator 125, saturated steam with a pressure of about 0.5 MPa is obtained, which is returned to the granulator 15 as a mist fluid for granulating molten slag.

Alternatively, the granulated slag in the slag bin 112 is transported to the slag micropowder production line by truck 115 and directly ground into slag micro powder with a specific surface area of about 420 m²/kg.

The exhaust gas generated during the production process is sent to the exhaust gas purification device 120, where it undergoes dust removal and desulfurization treatment to meet relevant emission standards, being extracted by the fan 121 and discharged through the chimney 122. The desulfurization and dust removal solution are pumped cyclically into the exhaust gas purification device 120 by a circulation pump 119. When the concentration of the circulating solution reaches a certain value (depending on the actual treatment scenario), part of it is discharged, and fresh alkali solution is supplemented from outside to maintain normal and efficient effects of desulfurization and dust removal.

The present embodiment utilizes the high-speed mist fluid ejected from the granulator to impact, crush, and granulate blast furnace molten slag. The flow rate of the high-speed mist fluid is controllable and varies with the amount of blast furnace molten slag measured by the online weighing device. When the flow rate of blast furnace molten slag is low, the flow rate of the mist fluid is appropriately reduced; when the flow rate of slag increases, the flow rate of the mist fluid increases accordingly. The maximum flow rate of mist fluid ensures the safe granulation of blast furnace molten slag when the maximum amount is reached.

The cooling water in the cyclone separator and the rotary bed coil absorbs heat to form saturated steam at 1.2-1.6 MPa, which is then sent to the superheated steam generator. Using natural gas or mixed coal gas generated during steel smelting, the saturated steam is appropriately heated to form superheated steam at 1.2-1.6 MPa and 250-350°C. The formed superheated steam is directly sent to the gas jet mill as the power source for slag powdering. After expansion and work in the gas jet mill, the quality of the superheated steam decreases, with the pressure falling to atmospheric pressure and the temperature decreasing to 150-250°C. This part of the gas enters the waste heat recovery device, where it undergoes shell-and-pipeline type inter-wall heat exchange to produce saturated steam at 0.4-0.5 MPa. The formed saturated steam can be directly returned to the granulator as a mist fluid for the granulation of blast furnace molten slag. After interaction with the blast furnace slag, the mist fluid undergoes slag-gas separation and enters the waste heat recovery device for reuse. This implementation method achieves gradient recovery of the sensible heat from blast furnace slag and utilizes the recovered heat locally at the same level.

The above-mentioned apparatus for waste heat the method of coupled utilization of slag waste heat recovery utilizes a mist granulation way which combines water quenching and air crushing to recover the sensible heat of blast furnace molten slag step by step and the r directly utilizes the recovered heat in the processing of blast furnace molten slag. This not only achieves safe and rapid granulation of blast furnace molten slag but also improves the utilization rate of recovered waste heat, avoiding the low utilization rate of the conventional methods in utilizing the sensible heat from blast furnace molten slag after recovery.

In the present embodiment, steam can be recycled, avoiding water resource waste and reducing the granulation cost of blast furnace molten slag. The treatment process is environmentally friendly, achieving safe and rapid granulation of blast furnace molten slag and obtaining high-quality granulated slag. This enables high-value resource utilization of blast furnace molten slag and high-efficient recovery and utilization of its sensible heat.

According to another embodiment of the present invention, a blast furnace molten slag granulation apparatus and process with a high-speed steam nozzle are provided, which combines the advantages of water quenching and air quenching granulation technologies, using high-speed steam with water mist to cool and granulate molten slag. This approach reduces appropriately the consumption of fresh water to reduce costs while ensuring a cooling rate of the molten slag to facilitate the formation of glass-phase solid slag. Additionally, the apparatus can fully utilize the waste heat of the molten slag to reduce energy loss. It has the advantages of fast cooling rate, good molten slag crushing effect, and low energy consumption.

Specifically, referring to Figure 2, it shows an apparatus for implementing the molten slag granulation method according to the present embodiment. Specifically, the present embodiment provides a blast furnace molten slag granulation apparatus with a high-speed steam nozzle, comprising:
a molten slag granulator body 21, which is a box structure, a slag chute 211 used for molten slag 2100 entry is arranged on one side of the upper part of the molten slag granulator body 21, and a steam outflow passage 212 is arranged on the top of the molten slag granulator body 21.
a steam spray mechanism 22, which comprises a first control valve F21, a water pump 221, a second control valve F22, a pressure gauge 222, a heat exchanger 223, a thermometer 224, and a nozzle 225 arranged in sequence along a pipeline 220; an inlet end of the pipeline 220 is connected to a water source 2200; the nozzle 225 is arranged on a side-wall of the molten slag granulator body 21 where the slag chute 211 is located, and the axial direction of the nozzle 225 forms an angle with the axial direction of the slag chute 211, and the outlet of the nozzle 225 facing the molten slag flowing out of the slag chute 211;
a waste heat recovery pipeline 23 and a heat-exchange fluid outlet pipeline 24 are arranged on the heat exchanger 223; a valve F23 is installed on the waste heat recovery pipeline 23.

Preferably, the first control valve F21 is an electro-hydraulic gate valve.

Preferably, the axial direction of the nozzle 225 forms an angle of 30-60° with the axial direction of the slag chute 211.

The molten slag granulation method of using the above-mentioned molten slag granulation apparatus with a high-speed steam nozzle is implemented as follows: water entering a pipeline is pressurized by a water pump and then directed into a heat exchanger, where it is heated by heat from a waste heat recovery pipeline. The water reaches a state above atmospheric pressure and above the boiling point at normal pressure. After being ejected from the nozzle, the water instantly vaporizes at normal pressure, forming a high-speed jet containing steam (for example, with a jet velocity of 90-110 m/s) that impacts the molten slag flowing out of the slag chute. The high-speed jet cools the molten slag and breaks it into small granules that fall into the bottom of molten slag granulator body. The mixed jet ejected from the nozzle completely turns into steam after impacting the molten slag flows out from the top of the device as a waste heat resource for subsequent utilization.

Preferably, the water entering the pipeline is pressurized by the water pump, raising a pressure in the pipeline to 0.1-1 MPa; the heat from the waste heat recovery pipeline raises a temperature of water in the heat exchanger to 100-182°C.

Compared with existing technologies, the advantages of using the molten slag granulation method and apparatus according to the present embodiment are as follows:
The high-speed jet ejected from the nozzle completely turns into steam after crushing and exchanging heat with the blast furnace molten slag, which greatly reduces water resource consumption compared to traditional wet-processes, reduces water pollution, and reduces the emission of harmful gases. Additionally, there is no need to dry the cooled blast furnace molten slag.

The sensible heat of the molten slag is exchanged with the jet ejected from the nozzle, and the enthalpy of the high-temperature steam generated is higher than enthalpy of the hot air generated by the traditional air quenching process. This improves the efficiency of sensible heat recovery and enhances the potential for waste heat recovery.

Compared to the air quenching process, the apparatus according to the present embodiment makes the fluid in the pipeline have higher pressure with lower energy, consumption, reducing cost and noise pollution. Since the heat exchange medium is water, the cooling rate of high-temperature molten slag is also faster than the cooling rate of wind quenching, which is more conducive to the formation of glass-phase slag. Higher glass phase content and quality improve the recovery rate of blast furnace molten slag.

By using waste heat to heat the pipeline, the energy of forming steam comes entirely from the waste heat and residual heat of the steel plant, improving the utilization rate of energy.

Due to the flowing medium in the pipeline being water, it is easier to achieve high pressure with a liquid compared to a gas, providing greater impact kinetic energy.

According to another embodiment of the present invention, a horizontal molten slag granulation process and apparatus with gas-water mixing are provided. The high-speed gas flow ejected from the gas nozzle array component impacts the liquid molten slag and crush it. The high-density mist droplets ejected from the gas-liquid dual-fluid nozzles rapidly cool the granulated slag granules and assist in granulation, facilitating fast slag-forming. The use of mist instead of direct water quenching reduces consumption of fresh water, lowers costs, and ensures a cooling rate of molten slag conducive to the formation of glass-phase solid slag. Additionally, the process fully utilizes the waste heat of molten slag to reduce energy loss. It has the advantages of fast cooling rate, good slag crushing effect, and low energy consumption.

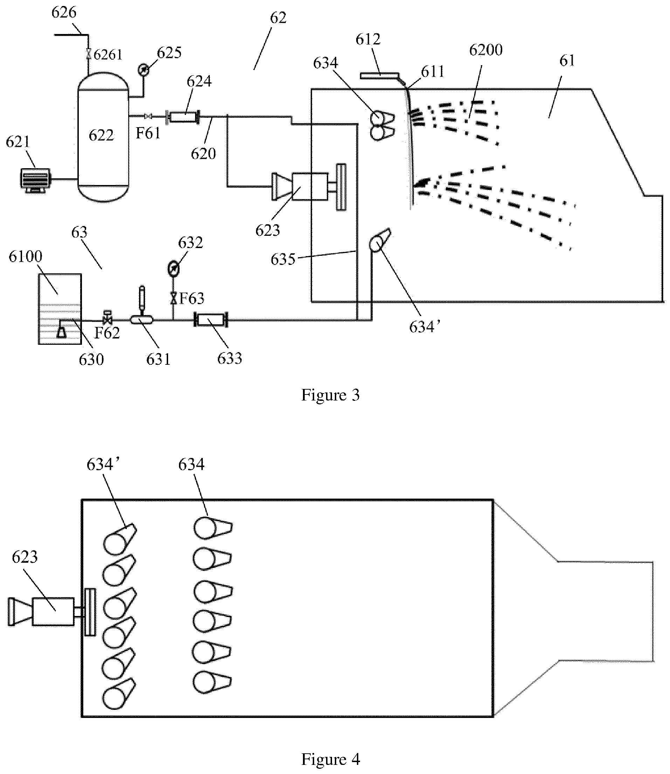

Referring to Figure 3, it shows an apparatus for implementing the molten slag granulation method according to the present embodiment. Specifically, the present embodiment provides a horizontal molten slag granulation process with gas-water mixing, which uses a high-speed gas flow ejected from an air nozzle array component composed of gas nozzles to crush the falling molten slag into molten slag granules. At the same time, adopting rows of gas-liquid dual-fluid nozzles to spray water mist onto the molten slag granules to rapidly cool them and apply an auxiliary pushing force, ensuring accurate entry into the rear slag granule collection section.

Preferably, the above-mentioned high-speed gas nozzle is a supersonic nozzle.

Referring to Figures 3-5, the apparatus for above-mentioned horizontal molten slag granulation process with gas-water mixing, comprising:
a molten slag granulator body 61, which is a box structure, and a slag flow inlet 611 is arranged on the top of the molten slag granulator body, a slag chute 612 is arranged above the molten slag granulator body;
a high-speed air jet mechanism 62, comprising:
   a compressor 621, a gas storage tank 622, a gas transmission pipeline 620 connected to the gas storage tank 622, and an air nozzle array component 623 connected to one end of the gas transmission pipeline 620; a first control valve F61 and a flowmeter 624 are sequentially arranged on the gas transmission pipeline 620 connected to an outlet end of the gas storage tank 622; the air nozzle array component 623 comprises multiple gas flow nozzles and corresponding branch pipelines, and the branch pipeline are connected to the gas transmission pipeline 620; the gas flow nozzles are arranged on upper part of one side-wall of the molten slag granulator body 61; the gas flow nozzle is a supersonic nozzle;
   a pressure gauge 625, a gas inlet pipe 626, and a gas inlet valve 6261 are arranged on the gas storage tank 622;
   the air nozzle array component 623 is connected to the gas transmission pipeline 620;
   a spray mechanism 63, comprising: a second control valve F62, a water pump 631, a third control valve F63, a pressure gauge 632, a flowmeter 633, and multiple gas-liquid dual-fluid nozzles 634, 634' arranged in sequence along a water transmission pipeline 630; an inlet end of the water transmission pipeline 630 is connected to a water source 6100; the gas-liquid dual-fluid nozzles 634, 634' are arranged at the inner upper part and the bottom of the molten slag granulator body 61, and the gas-liquid dual-fluid nozzles 634, 634' are connected to the gas transmission pipeline 620 and the water transmission pipeline 630 through connecting pipelines 635.

Referring to Figure 4, wherein the above-mentioned gas-liquid dual-fluid nozzles 634, 634' are arranged in an array.

Preferably, the axial direction of the air nozzle array component 623 forms an angle of 0-20° with the horizontal direction; preferably, a width of the air nozzle array component 623 is greater than a width of the slag flow inlet 611.

Preferably, the second control valve F62 is an electro-hydraulic gate valve.

Preferably, the molten slag granulator body 61 is semi-closed, and its rear part is provided with a slag granule collection section.

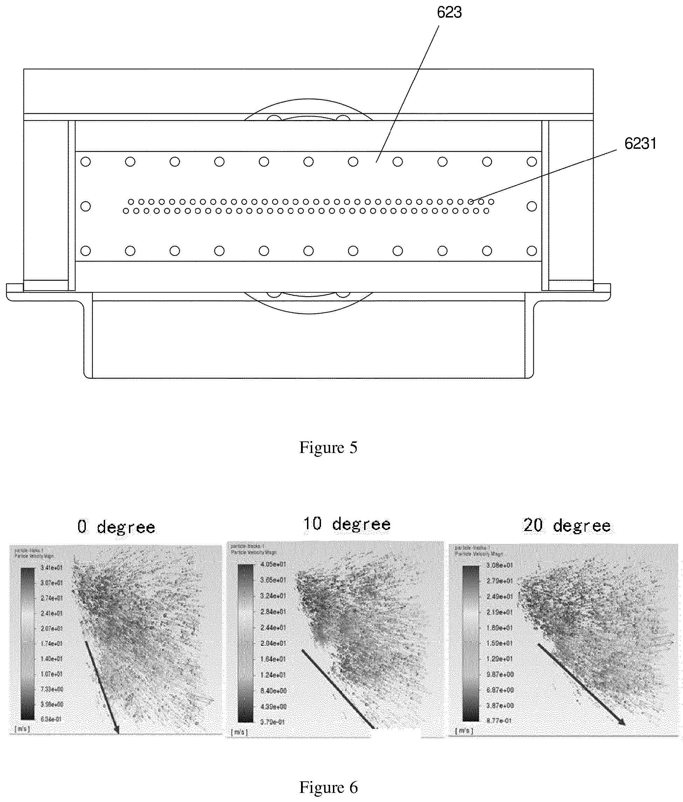

Referring to Figure 5, it shows a structural form of an outlet of the air nozzle array component 623, and the outlet of the air nozzle array component 623 comprises multiple uniformly distributed spray holes 6231.

Taking a slag flow rate of 5 ton/min as an example, the flight trajectory of molten slag granules is simulated and calculated.

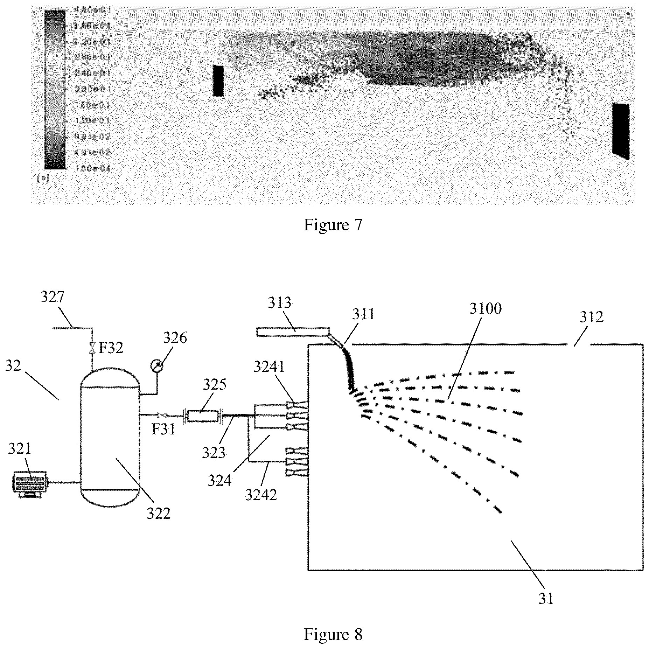

As shown in Figure 6, the flight behavior of slag granules is simulated when different nozzle array components are used at different angles (0°, 10°, 20°). The flight angle of slag granules is affected by the inclination angle of the gas flow, but the inclination angle of the gas flow cannot be excessively increased. As shown in Figure 7, it is found that some slag granules collide with the upper wall of the molten slag granulator body when the inclination angle of the gas flow exceed 20°.

In addition, through simulation calculations of the molten slag granulation process, the speed of the high-speed gas flow ejected from the air nozzle array component is preferably 90-110 m/s. If the gas flow speed is too low, the molten slag cannot be fully crushed, and the molten slag will quickly fall and adhere to the inner wall of the molten slag granulator body. If the gas flow speed is too high, the granulation effect and slag granule size cannot be significantly improved.

Compared with existing technologies, the advantages of the present embodiment are as follows:
The high-speed jet ejected from the gas flow nozzle of the air nozzle array component crushes the blast furnace molten slag, significantly reducing water resource consumption compared to traditional wet processes, reducing water pollution, and reducing the emission of harmful gases. Additionally, the gas pipelines are less prone to wear and tear, maintenance cost is less, and it does not require additional energy to dry the cooled blast furnace molten slag.

The sensible heat of the molten slag is exchanged with a large number of mist droplets ejected from the atomization nozzle, and the enthalpy of the high-temperature steam generated is higher than the enthalpy of the hot air generated by the traditional air quenching processes. This improves the efficiency of sensible heat recovery and enhances the potential for waste heat recovery.

Compared to the air quenching process, the apparatus according to the present embodiment mainly uses mist droplets formed by water crushing as the heat exchange medium, and the cooling rate of high-temperature molten slag is faster than the cooling rate of air quenching, which is more conducive to the formation of glass-phase slag. Higher glass phase content and quality improve the recovery rate of blast furnace slag.

By multiple rows of gas-liquid dual-fluid atomization nozzles arranged at the bottom and upper part of the molten slag granulator body, uniformly distributed mist droplets are formed and exchange heat with the molten slag. Compared to general water flow impact, the uniform mist droplets provide more thorough heat exchange with the molten slag, and the uniform gas flow field ensures more uniform granulation and better slag formation.

The mist droplets ejected from the atomization nozzle have a certain auxiliary effect on the granulation of the molten slag and granules flight, and achieving better results than pure gas quenching.

The molten slag granulator body is a horizontal semi-enclosed device, with a slag granule collection section at its rear, making it easier to collect granulated slag particles and preventing slag from sticking to the walls due to difficulty in collection.

The nozzle arrays are arranged near the slag flow inlet, in the middle of the granulation apparatus, and at the bottom of the granulation apparatus to impact, thin, and granulate the slag flow in stages, preventing the problem of the insufficient granulation caused by excessive slag flow.

According to another embodiment of the present invention, an apparatusfor granulating blast furnace molten slag using a gas nozzle array is provided. The high-speed gas flow ejected from the high-speed gas nozzle impacts the liquid molten slag to crush it and rapidly cools the granulated slag granules to facilitate fast slag-forming. This approach appropriately reduces water consumption to lower costs while ensuring a cooling rate conducive to the formation of glass-phase solid slag. Additionally, the apparatus fully utilizes the waste heat of molten slag to reduce energy loss, combining the advantages of both water quenching and air quenching granulation technologies. The cooling rate is fast, the molten slag crushing effect is good, and the energy consumption is low.

Referring to Figure 8, the apparatus for granulating blast furnace molten slag using a gas nozzle array according to the present embodiment comprises:
a molten slag granulator body 31, which is a box structure, and a slag flow inlet 311 and steam outlet passage 312 are arranged on the top of the molten slag granulator body, the blast furnace molten slag 3100 enters the molten slag granulator body 31 through the slag chute 313 and the slag flow inlet 311;
a high-speed air jet mechanism 32, comprising:
   a compressor 321, a gas storage tank 322, a gas transmission pipeline 323 connected to the gas storage tank 322, and a nozzle array 324 connected to one end of the gas transmission pipeline 323; a first control valve F31 and a flowmeter 325 are sequentially arranged on a gas transmission pipeline 323 connected to an outlet end of the gas storage tank 322;
   a pressure gauge 326, a gas inlet pipe 327, and a gas inlet valve F32 are arranged on the gas storage tank 322;
   the nozzle array 324 comprises multiple nozzles 3241 and corresponding branch pipelines 3242, each branch pipelines 3242 is respectively connected to the gas transmission pipeline 323; the nozzles 3241 are arranged on one side-wall of the molten slag granulator body 31.

Preferably, the nozzles 3241 in the nozzle array 324 are one or more selected from supersonic nozzles, atomization nozzles or gas-liquid dual-fluid nozzles; preferably, the axial direction of the nozzles 3241 in the nozzle array 324 is perpendicular to a side-wall of the molten slag granulator body 31.

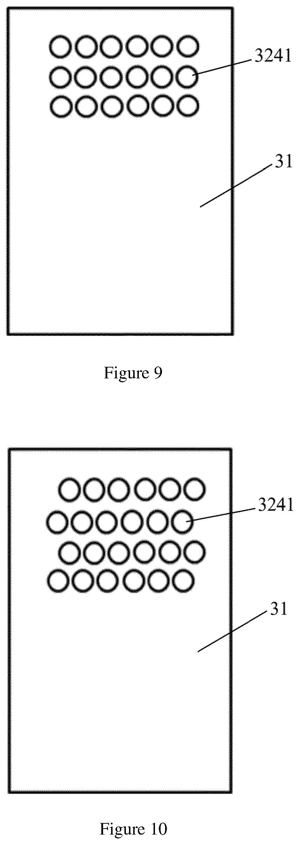

Referring to Figures 9 to 11, the nozzles 3241 in the nozzle array 324 are arranged in multiple rows and columns.

Preferably, as shown in Figures 10 to 11, the nozzles 3241 in the nozzle array 324 are arranged in multiple rows and columns, with the nozzles in adjacent rows staggered in the vertical direction.

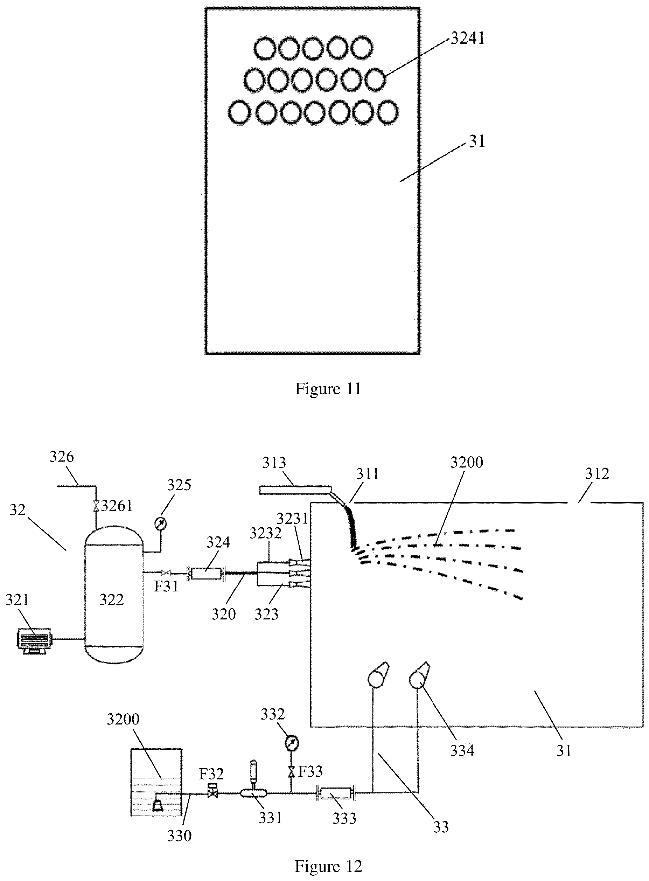

Preferably, as shown in Figure 11, the nozzles 3241 in the nozzle array 324 are arranged in multiple rows and columns, with the number of nozzles gradually decreasing or increasing along the vertical direction.

The high-speed jet (e.g., with a jet velocity of 90-110 m/s) ejected from the high-speed gas nozzle crushes the blast furnace molten slag, reducing water resource consumption, water pollution, and harmful gas emissions. Additionally, the gas pipelines are less prone to wear and maintenance cost is less, and no additional energy is required to dry the cooled blast furnace molten slag. Compared to the air quenching process, the apparatus according to the present embodiment can achieve higher speeds of gas inside the pipeline at the same pressure with less energy consumption by installing high-speed gas nozzles, resulting in lower costs and less noise pollution. The cooling rate of high-temperature molten slag is also faster than the cooling rate of traditional air quenching, which is more conducive to the formation of glass-phase slag. Higher glass phase content and quality improve the recovery rate of blast furnace molten slag. By installing multiple high-speed gas nozzles at the bottom, a uniformly distributed high-speed gas flow is formed to exchange heat with the molten slag. The arrangement of the nozzle array ensures more thorough heat exchange with the molten slag. The gas flow field formed by the array can uniformly and fully cover the flowing range, resulting in more uniform granulation and better slag formation.

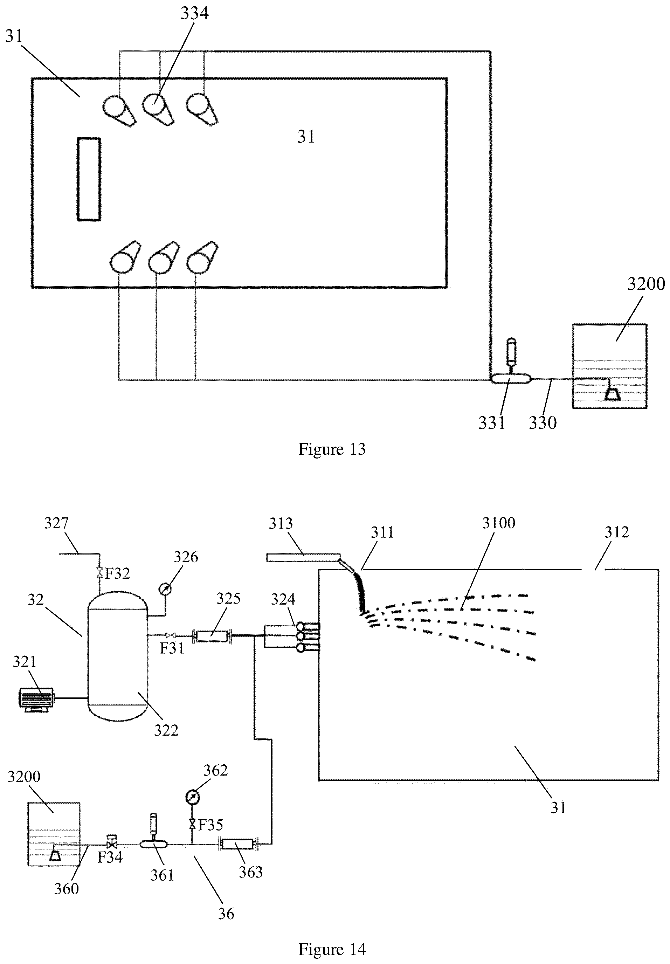

Referring to Figures 12 and 13, the molten slag granulation apparatus according to the present embodiment further comprises: a nozzle atomization mechanism 33, which comprises a second control valve F32, a water pump 331, a third control valve F33, a pressure gauge 332, a flowmeter 333, and multiple atomization nozzles 334 arranged in sequence along the water transmission pipeline 330; an inlet end of the water transmission pipeline 330 is connected to a water source 3200; the atomization nozzles are arranged at the inner bottom of the molten slag granulator body 31 and are arranged in at least two rows, with an ejection direction of water mist facing the molten slag flowing in from the slag flow inlet 311.

Referring to Figure 14, it shows a schematic structural diagram of a molten slag granulation apparatus according to another embodiment of the present invention, wherein the nozzles in the nozzle array 324 are gas-liquid dual-fluid nozzles; correspondingly, the molten slag granulation apparatus is also installed with a nozzle water supply mechanism 36, which comprises a fourth control valve F34, a water pump 361, a fifth control valve F35, a pressure gauge 362, and a flowmeter 363 arranged in sequence along the water transmission pipeline 360; an inlet end of the water transmission pipeline 360 is connected to the water source 3200, and an outlet end is connected to an inlet end of the gas-liquid dual-fluid nozzles.

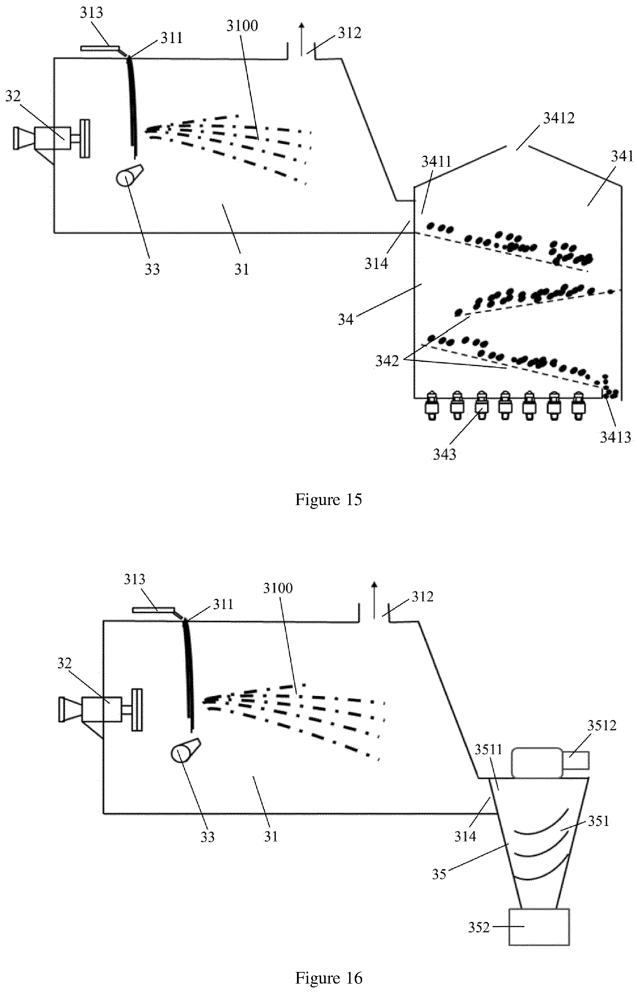

Referring to Figure 15, it shows a schematic structural diagram of a molten slag granulation apparatus according to another embodiment of the present invention, wherein the molten slag granulation apparatus further comprises a waste heat recovery system 34, which comprises:
a heat exchange box 341, a feed inlet 3411 connected to a discharge outlet of the molten slag granulator body 31 is arranged on the upper part of one side-wall of the heat exchange box; a heat exchange gas flow outlet 3412 is arranged on the top of the heat exchange box 341; multiple perforated bed plates 342 are arranged along a height direction inside the heat exchange box 341; a molten slag granule outlet 3413 is arranged at the bottom of the heat exchange box 341;
a gas nozzle array 343, which is arranged at the inner bottom of the heat exchange box 341, below the perforated bed plates 342, and gas nozzles in the gas nozzle array are arranged opposite to the perforated bed plates 342; and the ejected gas can further cool the slag granules falling along the perforated bed plates 342.

Preferably, the perforated bed plates 342 are arranged in a zigzag pattern along a vertical direction inside the heat exchange box 341. As shown in Figure 15, the falling path of slag granules is extended, which is beneficial for effective cooling of slag granules.

The process of molten slag granulation is carried out inside the molten slag granulator body. The high-speed air jet mechanism and atomization nozzle mechanism provide the main power for crushing and granulating the molten slag and perform primary heat exchange. The waste heat recovery system separates slag granules from gas and performs secondary heat exchange.

The working process is as follows:
The nozzle array in the high-speed air jet mechanism provides a uniform high-speed gas flow to uniformly crush the falling blast furnace molten slag, obtaining high-temperature molten slag granules moving in a parabolic trajectory. The atomization nozzle in the nozzle atomization mechanism performs a water mist spraying on the molten slag granules moving in a parabolic trajectory at the bottom of the molten slag granulator body, which increases heat transfer efficiency and rapidly cools the molten slag granules and provides a pushing force to the molten slag. At the tail of the molten slag granulator body, a slag granule collection section is provided, which directs the slag granules, and the high-temperature gas flow formed during slag cooling into the heat exchange box of the waste heat recovery system for gas-solid separation. The slag granules pass through multiple perforated bed plates and undergo sufficient heat exchange with the cold air ejected from the gas nozzles of the gas nozzle array below. The heat exchange air flows out from the upper outlet, and the cooled slag falls from the lower outlet of the heat exchange box.

During use, the compressor is turned on to pressurize the gas and send it into the gas storage tank. The stable pressure gas is supplied to the (supersonic gas) nozzle array through the gas storage tank. The nozzles inject high-speed gas flow into the molten slag granulator body to crush the molten slag entering from the molten slag inlet. At the same time, turn on the water pump to pressurize the water in the water pipeline, which is then sprayed through the atomization nozzle. The spayed mist droplets impact the granulated molten slag granules, and the molten slag granules are rapidly cooled and transformed into stable small particles. The mixed jet ejected from the nozzles in the nozzle array and the atomization nozzles in the nozzle atomization mechanism impacts the high-temperature molten slag, turning it into a mixture of high-temperature air and steam, which flows out from the top of the molten slag granulator body as a waste heat resource for subsequent recycling and utilization.

Referring to Figure 16, it shows a schematic structural diagram of a molten slag granulation apparatus according to another embodiment of the present invention, wherein the waste heat recovery system 34 adopts a cyclone separator 35.

The cyclone separator 35 comprises a separator body 351, and a gas-solid medium inlet 3511 connected to the discharge outlet 314 of the molten slag granulator body 31 is arranged on the upper part of one side of the separator body; an air outlet 3512 is arranged on the top of the separator body 351, and a dust hopper 352 is arranged at the bottom of the separator body 351.

The slag granules and high-temperature gas flow enter the cyclone separator 35 for gas-solid separation. The cyclone separator 35 can separate clean high-temperature gas flow and fully recover the waste heat generated during the molten slag granulation process for subsequent utilization.

Compared with existing technologies, the advantages of the present embodiment are as follows:
The high-speed jet ejected from the high-speed gas nozzle crushes the blast furnace molten slag, reducing water resource consumption, water pollution, and harmful gas emissions. Additionally, the gas pipelines are less prone to wear, and maintenance cost is less, and no additional energy is required to dry the cooled blast furnace molten slag;
Compared to the air quenching process, the apparatus makes the gas in pipeline achieve higher speed at the same pressure with less energy consumption by installing high-speed gas nozzles, resulting in lower costs and less noise pollution. The cooling rate of high-temperature molten slag is also faster than the cooling rate of traditional air quenching, which is more conducive to the formation of glass-phase slag. Higher glass phase content and quality improve the recovery rate of blast furnace molten slag.

By installing multiple high-speed gas nozzles at the bottom, a uniformly distributed high-speed gas flow (e.g., with a jet velocity of 90-110 m/s) is formed to exchange heat with the molten slag. The arrangement of the nozzle array ensures more thorough heat exchange with the molten slag. The gas flow field formed by the array can uniformly and fully cover the gas flow range, resulting in more uniform granulation and better slag formation.

By installing multiple atomization nozzles at the bottom of the molten slag granulator body, uniformly distributed mist droplets are formed to exchange heat with the molten slag. Compared to general water flow impact, the heat exchange between mist droplets and molten slag is more sufficient. Additionally, the spray of mist droplets provides a pushing force for the molten slag granules after gas quenching, preventing them from falling into the bottom of the apparatus and causing adhesion.

Preferably, the high-speed gas nozzles are arranged in a (supersonic) nozzle array, and the gas flow field formed by the array can uniformly and fully cover the slag flow range, resulting in more uniform granulation and better slag formation.

The present embodiment adopts a multi-layer arrangement of waste heat recovery section design, where slag granules and high-temperature gas flow enter the heat exchange box for secondary waste heat gas recovery, heat exchange, and gas-solid separation, greatly improving the efficiency of waste heat recovery. Additionally, the gas nozzles arranged in an array at the bottom can quickly cool the molten slag granules and separate the high-temperature gas flow, allowing the waste heat of the molten slag to be fully recovered.

According to another embodiment of the present invention, the apparatus is an apparatus capable of cleaning falling slag and granulating the slag by mist. The high-speed gas flow ejected from the high-speed nozzle array component impacts the liquid molten slag and crush it. The high-density mist droplets ejected from the atomization nozzles rapidly cool the granulated slag granules, facilitating fast slag-forming. The use of mist instead of water quenching (direct water spraying), lowers costs, and ensures a cooling rate conducive to the formation of glass-phase solid slag. Additionally, the apparatus can fully utilize the waste heat of molten slag to reduce energy loss. It has the advantages of fast cooling rate, good slag crushing effect, and low energy consumption.

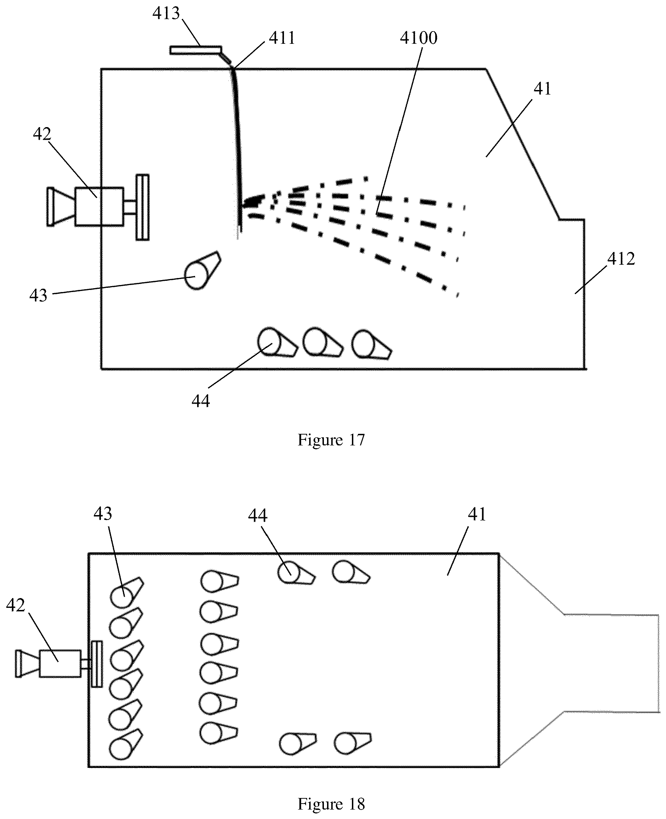

Referring to Figure 17 and 18, the apparatus capable of cleaning falling slag and granulating the slag by mist in the present embodiment, comprises:
a molten slag granulator body 41, which is a box structure, a slag flow inlet 411 is arranged on the top of the molten slag granulator body and a slag granule collection section 412 is arranged at the tail of the molten slag granulator body; the molten slag 4100 enters the molten slag granulator body 41 from the slag inlet 411 through the slag chute 413;
a gas nozzle array 42, arranged on one side-wall of the molten slag granulator body 41;
an atomization nozzle array 43, arranged at the inner bottom of the molten slag granulator body 41, with an ejection direction of gas mist facing the molten slag flowing in from the slag flow inlet 411;
a fallen slag cleaning nozzle 44, arranged at the inner bottom of the molten slag granulator body 41, with an outlet of the fallen slag cleaning nozzle facing the inner bottom of the molten slag granulator body 41 and the slag granule collection section 412.

Preferably, the axial direction of the gas nozzle array 42 is perpendicular to one side-wall of the molten slag granulator body 41.

Preferably, the fallen slag cleaning nozzle 44 is one or more selected from water atomization nozzles, steam atomization nozzles, high-speed gas flow nozzles, or gas-liquid dual-fluid nozzles.

The gas nozzle array provides a uniform high-speed gas flow (e.g., with a jet velocity of 90-110 m/s), which uniformly crushes the falling blast furnace molten slag, resulting in crushed molten slag granules moving in a parabolic trajectory. The atomization nozzles perform a water mist spraying onto the molten slag granules moving in a parabolic trajectory at the bottom of the molten slag granulator body, increasing heat transfer efficiency to rapidly cool the crushed molten slag granules and providing a pushing force to the molten slag. A slag granule collection section is arranged at the tail of the molten slag granulator body, and the fallen slag cleaning nozzle (atomization nozzle) is used to exchange heat and blow the slag granules that fall to the inner bottom of the molten slag granulator body to prevent them from sticking to the walls.

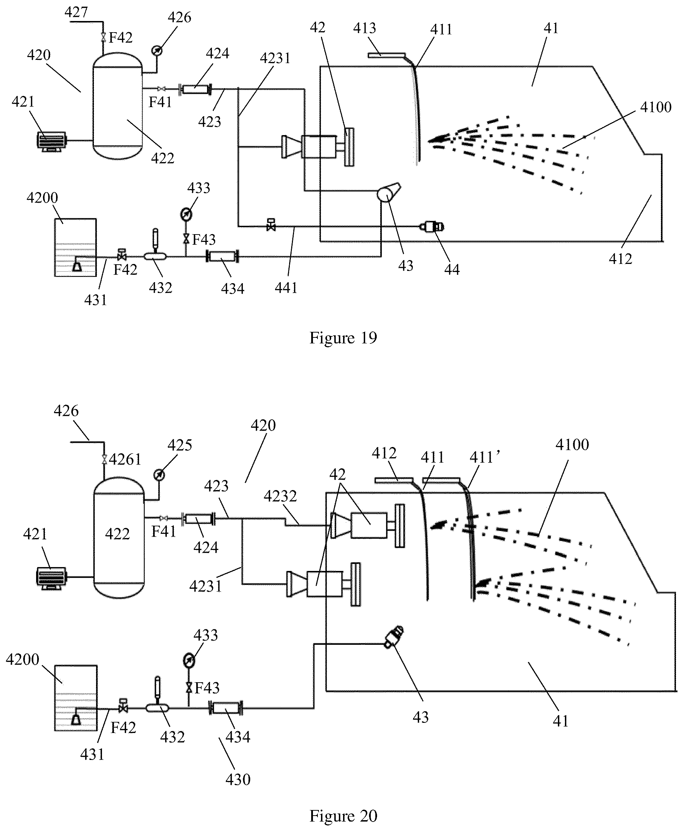

Referring to Figures 19 and 20, they show schematic structural diagrams of a molten slag granulation apparatus according to another embodiment of the present invention, wherein the apparatus further comprises:
a high-speed air jet mechanism 420, comprising:
a compressor 421, a gas storage tank 422, a gas transmission pipeline 423 connected to the gas storage tank 422, and a gas nozzle array 42 connected to one end of the gas transmission pipeline 423; a first control valve F41 and a flowmeter 424 are sequentially arranged on the gas transmission pipeline 423 of an outlet end of the gas storage tank 422;
a pressure gauge 426, a gas inlet pipe 427, and a gas inlet valve F42 are arranged on the gas storage tank 422;
the gas nozzle array 42 comprises nozzles and corresponding branch pipelines 4231, 4232, the branch pipelines are connected to the gas transmission pipeline 423; the fallen slag cleaning nozzle 44 is connected to the gas transmission pipeline 423 through a connecting pipeline 441 and a valve;
a nozzle atomization mechanism 430, comprising a second control valve F42, a water pump 432, a third control valve F43, a pressure gauge 433, and a flowmeter 434 arranged in sequence along a water transmission pipeline 431, wherein an inlet end of the water transmission pipeline 431 is connected to a water source 4200, and an outlet end of the water transmission pipeline is connected to the atomization nozzle array 43.

Referring to Figure19, the nozzles of the atomization nozzle array 43 are gas-liquid dual-fluid nozzles, whose inlet ends are respectively connected to the gas transmission pipeline 423 and the water transmission pipeline 431.

Referring to Figure 20, it shows a schematic structural diagram of a molten slag granulation apparatus according to another embodiment of the present invention, wherein multiple slag flow inlets 411, 411' are arranged on the top of the molten slag granulator body 41.

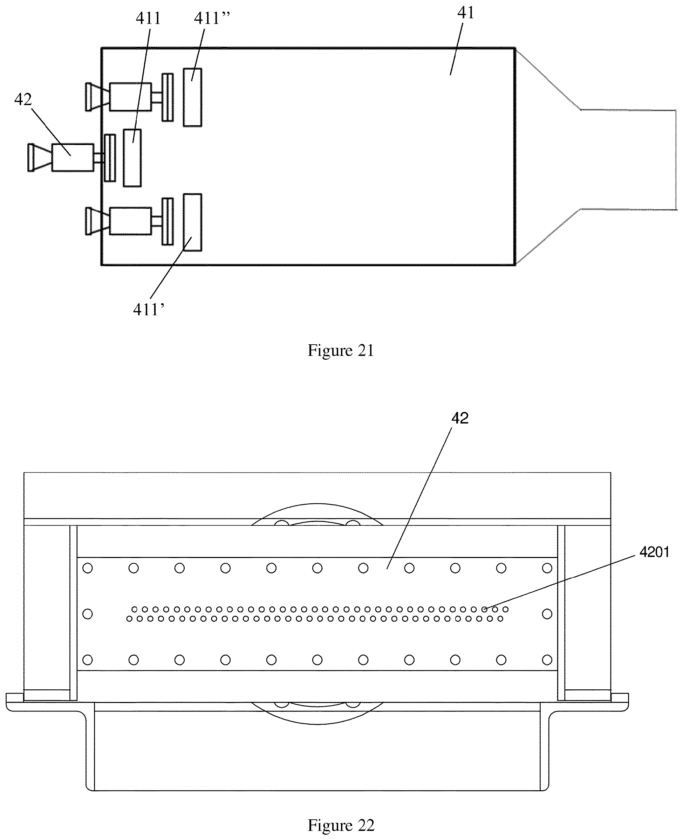

Referring to Figure 21, it shows a top view of the slag inlet of the molten slag granulator body 41 in Figure 20, illustrating one arrangement of slag inlets. In the present embodiment, multiple slag flow inlet 411, 411', 411" are arranged on the top of the molten slag granulator body 41.

Referring to Figure 22, it shows a schematic structural diagram of the nozzles in the gas nozzle array 42 in the present embodiment. A uniform and larger number of gas flow jet holes 4201 are arranged at the center area. The number and arrangement of holes and rows can be adjusted according to the actual situation.

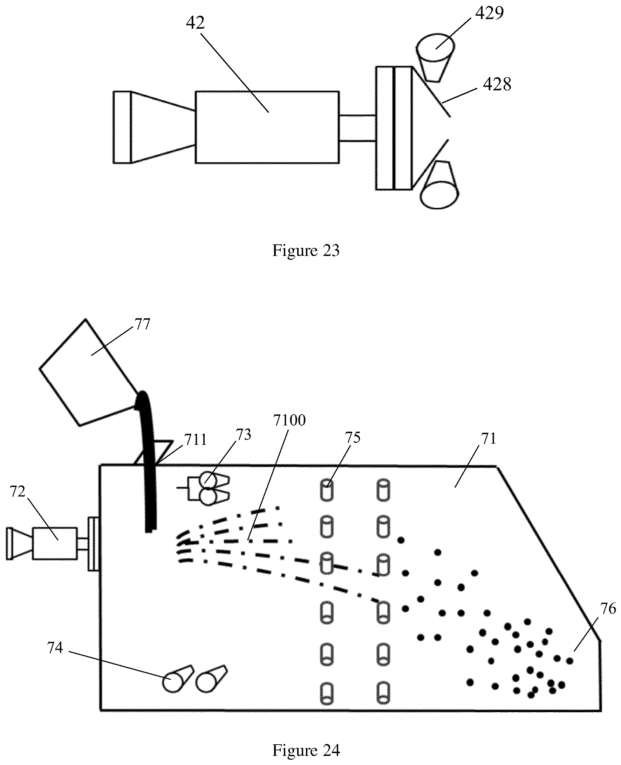

Referring to Figure 23, it shows another structural design of the gas nozzle array 42 in the present embodiment. Baffles 428 are arranged respectively on both sides of the outlet position of the gas nozzle array 42, and liquid/atomization nozzles 429 are arranged respectively on the outside of the baffles 428. The high-speed air ejected from the gas nozzle array 42 is used to crush and atomize the water ejected from the liquid/atomization nozzles 429.

Compared with existing technologies, the advantages of the present embodiment are as follows:
The high-speed jet spayed from the gas nozzle array crushes the molten slag, significantly reducing water resource consumption compared to traditional wet processes, reducing water pollution, and reducing harmful gas emissions. Additionally, the gas pipelines are less prone to wear, maintenance cost is less, and it does not need to consume additional energy to dry the cooled blast furnace molten slag.

The sensible heat of the molten slag is exchanged with a large number of mist droplets ejected from the atomization nozzle array, and the enthalpy of the high-temperature steam generated is higher than the enthalpy of the hot air generated by the traditional air quenching process. This improves the efficiency of sensible heat recovery and enhances the potential for waste heat recovery.

Compared to the air quenching process, in the present embodiment, the heat exchange medium adopts mist droplets formed by water crushing, and the cooling rate of slag is faster than the cooling rate of air quenching, which is more conducive to the formation of glass-phase slag, and higher glass phase content and quality improve the recovery rate of blast furnace slag.

By installing multiple atomization nozzles at the bottom, uniformly distributed mist droplets are formed and exchanged heat with the molten slag. Compared to direct water flow impact, the heat exchange between the mist droplets and the molten slag is more sufficient. Additionally, the spray of mist droplets provides a pushing force for the molten slag granules after gas quenching, preventing them from falling into the bottom of the apparatus too early and causing adhesion.

Arranging gas nozzles in a gas nozzle array, the gas flow field formed by the array can uniformly and fully cover the slag flow range, resulting in more uniform granulation and better slag formation.

At the bottom of the molten slag granulator body, there is an atomization nozzle for fallen slag cleaning, which can clean the molten slag falling to the bottom of the granulation apparatus and prevent it from sticking to the walls.

The top of the molten slag granulator body is installed with multiple molten slag inlets, which divide the molten slag into small flow slag flow streams, greatly improving the molten slag processing capacity of the nozzles and granulation efficiency of the molten slag.

According to another embodiment of the present invention, an apparatus for rapidly cooling molten slag using atomization nozzles is provided. The high-speed gas flow ejected from the high-speed gas nozzle impacts the liquid molten slag to crush it. The high-density mist droplets ejected from the atomization nozzle rapidly cool the granulated slag granules, facilitating fast slag-forming. The use of mist instead of direct water quenching (direct water spraying), lowers costs, and ensures a cooling rate conducive to the formation of glass-phase solid slag. Additionally, the apparatus fully utilizes the waste heat of slag to reduce energy loss. It has the advantages of fast cooling rate, good slag crushing effect, and low energy consumption.

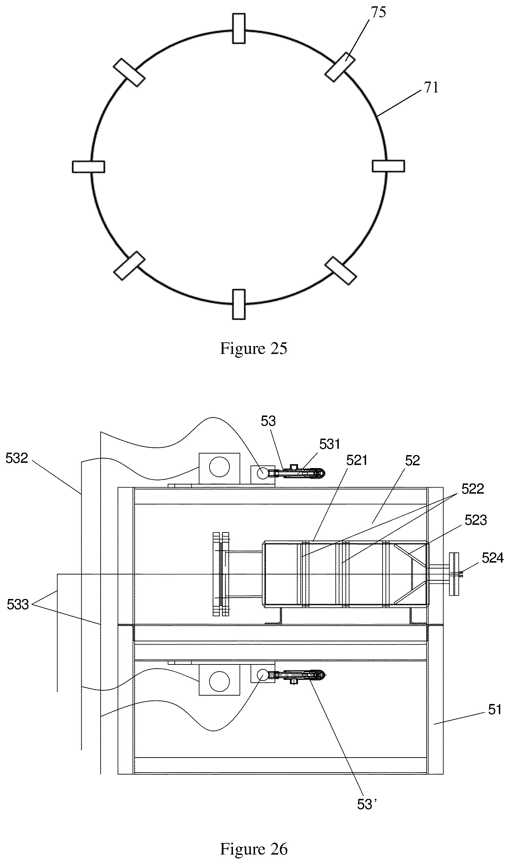

Referring to Figures 24 and 25, the apparatus for rapidly cooling molten slag using atomization nozzles according to the present embodiment comprises:
a molten slag granulator body 71, which is a box structure, and a slag flow inlet 711 is arranged on the top of the molten slag granulator body;
a gas nozzle array 72, arranged on one side-wall of the molten slag granulator body 71, and the axial direction of gas nozzles in the gas nozzle array is perpendicular to one side-wall of the molten slag granulator body;
a flow field optimization nozzle array 73, arranged at the inner upper part of the molten slag granulator body 71, near the slag flow inlet 711;
a slag cleaning nozzle array 74, arranged at the inner lower part or bottom of the molten slag granulator body 71;
an atomization nozzle array 75, arranged inside the molten slag granulator body 71, radially arranged around a slag flow 7100 on the inner wall of the molten slag granulator body 71, the axial direction of the atomization nozzles in the atomization nozzle array is perpendicular to the axial direction of the gas nozzles.

Preferably, a slag granule collection section 76 is arranged at the tail of the molten slag granulator body 71.

Preferably, the nozzles of the flow field optimization nozzle array 73 are gas nozzles or gas-liquid dual-fluid nozzles.

Preferably, the nozzles of the slag cleaning nozzle array 74 are gas nozzles.

Preferably, the nozzles of the atomization nozzle array 75 are water atomization nozzles.

The uniform high-speed gas flow provided by the gas nozzle array 72 (e.g., with a jet velocity of 90-110 m/s) is used to uniformly crush the molten slag falling from the slag container 77 into the molten slag granulator body 71, obtaining the molten slag granules moving in a parabolic trajectory. The flow field optimization nozzle array 73 further sprays the molten slag granules moving in a parabolic trajectory at the upper part of the molten slag granulator body 71, increasing the flying speed of the molten slag to enhance heat transfer and preventing the molten slag from sticking onto the walls and damaging the equipment. Multiple layers of atomization nozzles are installed around the inner wall of the molten slag granulator body 71, and the atomization nozzles are evenly arranged around the inner wall of the molten slag granulator body 71 to rapidly cool down the molten slag granules. The slag granules and high-temperature gas generated by heat transfer are collected by the slag granule collection section at the tail of the molten slag granulator body 71.

Compared with the existing technology, the advantages of the present embodiment are as follows:
The high-speed jet ejected from the high-speed gas nozzles crushes the blast furnace molten slag, significantly reducing water resource consumption compared to traditional wet processes, reducing water pollution, and reducing the emission of harmful gases. Additionally, the gas pipelines are less prone to wear, maintenance cost is less, and it does not need to consume additional energy to dry the cooled blast furnace molten slag.

The sensible heat of the molten slag is exchanged with a large number of mist droplets ejected from the atomization nozzle, and the enthalpy of the high-temperature steam generated is higher than the enthalpy of the hot air generated by the traditional air quenching process. This improves the efficiency of sensible heat recovery and enhances the potential for waste heat recovery.

Compared to the air quenching process, the heat exchange medium is mist droplets formed by water crushing, the cooling rate of high-temperature molten slag is faster, which is more conducive to the formation of glass-phase slag, and higher glass phase content and quality improve the recovery rate of blast furnace slag.

By multiple atomization nozzles being arranged uniformly surrounding the inner wall of the molten slag granulator body, uniformly distributed mist droplets are formed and exchange heat with the molten slag. Compared with the direct water flow impact, the heat exchange between the mist droplets and the molten slag is more sufficient.

The flow field optimization nozzle array provides an additional pushing force to the initially crushed molten slag granules, preventing them from falling into the bottom of the apparatus too early and occurring adhesion phenomenon.

The high-speed gas nozzles are arranged in a nozzle array, and the gas flow field formed by the array can uniformly and fully cover the slag flow range, resulting in more uniform granulation and better slag formation.

According to another embodiment of the present invention, a water mist granulation apparatus for blast furnace molten slag granulation is provided, which utilizes high-speed water flow (e.g., with a jet velocity of 90-110 m/s) ejected from a water nozzle array component and the water mist (e.g., with a jet velocity of 90-110 m/s) ejected from a gas-liquid dual-fluid nozzle to impact liquid molten slag and crush it. The high-density mist droplets ejected from the atomization nozzles rapidly exchanged heat and cool the crushed molten slag granules, assisting in granulation and facilitating fast slag-forming. The use of mist instead of water quenching (direct water spraying) reduces the consumption of fresh water, lowers costs, and ensures a cooling rate of molten slag conducive to the formation of glass-phase solid slag. Additionally, the apparatus can fully utilize the waste heat of molten slag to reduce energy loss. It has the advantages of fast cooling rate, good slag crushing effect, and low energy consumption.

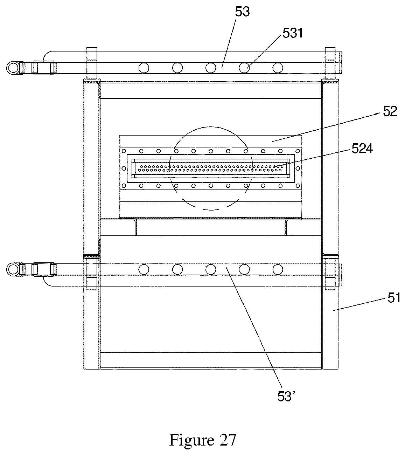

Referring to Figures 26 and 27, the present embodiment provides a water mist granulation apparatus for blast furnace molten slag granulation, which comprises:
a rack 51, which is a frame structure;
a water nozzle array component 52, comprising,
   a body 521, which is a box structure, and arranged in the middle of the rack 51, provided with a flow equalization plate 522 and a flow guide plate 523 at intervals in sequence inside it; wherein the rear end of the body 521 is connected to a water source;
   a water nozzle array 524, uniformly arranged on the front surface of the body 521;
a gas-liquid dual-fluid nozzle component 53, comprising,
   gas-liquid dual-fluid nozzles 531, arranged in parallel on both sides of the water nozzle array 524 and fixed to the rack 51;
   a gas pipeline 532 and a water transmission pipeline 533, both fixed to the rack 51 and connected to the gas-liquid dual-fluid nozzles 531.

Preferably, the gas-liquid dual-fluid nozzles 53, 53' are arranged in parallel on both sides of the water nozzle array 524.

The rear end of the body 521 of the water nozzle array component 52 is connected to the water source through a flange. After water enters the body 521, it passes through the flow equalization plate 522 and the flow guide plate 523, ensuring uniform water pressure distribution before being ejected from the water nozzle array 524. At the same time, gas and liquid enter the gas-liquid dual-fluid nozzle 531 for atomization from the gas pipeline 532 and the water transmission pipeline 533, respectively.

Compared with existing technologies, the advantages of the present embodiment are as follows:
The high-speed jet ejected from the water nozzle array component crushes the blast furnace molten slag, significantly reducing water resource consumption compared to traditional wet processes, reducing water pollution, and reducing the emission of harmful gases.

The sensible heat of the molten slag is exchanged with a large number of mist droplets ejected from the atomization nozzles, and the enthalpy of the high-temperature steam generated is higher than he enthalpy of the hot air generated by the traditional air quenching process. This improves the efficiency of sensible heat recovery and enhances the potential for waste heat recovery.

Compared with the air quenching process, this apparatus mainly uses mist droplets formed by water crushing as the heat exchange medium. The cooling rate of high-temperature molten slag is also faster than the cooling rate of wind quenching, which is more conducive to the formation of glass-phase slag, and higher glass phase content and quality improve the recovery rate of blast furnace slag.

By installing multiple rows of atomization nozzles at the top and bottom, uniformly distributed mist droplets are formed and exchanged heat with the molten slag. Compared with general water flow impact, the heat exchange between mist droplets and molten slag is more sufficient.

The jet flow field formed by the array can uniformly and fully cover the slag flow range, resulting in more uniform granulation and better slag formation.

Although the present invention has been illustrated and described by referring to certain preferred embodiments, those skilled in the art should understand that the above content is a further detailed description of the present invention in conjunction with specific embodiments and should not be construed as limiting the specific implementation of the present invention to these descriptions. Those skilled in the art can make various changes in form and detail, comprising making several simple deductions or substitutions, without departing from the essence and scope of the present invention.

## Claims

1. A molten slag granulation method, comprising: crushing molten slag to obtain molten slag granules, then cooling the molten slag granules, and collecting the resulting granulated slag.

2. The method according to claim 1, wherein,
the molten slag is subjected to jet granulation to obtain surface-solidified granules and steam, then the surface-solidified granules are cooled in a swirl flow field, and solid slag granules are obtained.

3. The method according to claim 1 or 2, wherein the method comprises the following steps:
1) the molten slag is fed into a flow guiding cover and is impacted, crushed, and granulated into granulated molten droplets with a particle size of 5 mm or less by a mist fluid ejected from a granulator, the granulated molten droplets fly directionally along a flow guiding cover with the mist fluid and are cooled and solidified by exchanging heat with the mist fluid during the formation and flying process, generating granulated slag of 1000°C or less and a gas flow of 300-600°C, achieving granulation and cooling solidification of the molten slag;
2) the granulated slag and the gas flow directly enter a cyclone separator after exiting the flow guiding cover, separation of slag and gas is achieved under combined action of centrifugal force and gravity, the separated granulated slag cools to 700-800°C and exits from the bottom of the cyclone separator;
the separated gas flow passes through the cyclone separator and an overflow pipeline, and its temperature is reduced to 150-300°C after heat-exchanging with cooling water in a spiral heat exchange pipeline inside the overflow pipeline, the gas flow enters a waste heat recovery device after exiting the cyclone separator and the overflow pipeline, performing a contact heat exchange with a heat exchange pipeline carrying cooling water inside the waste heat recovery device to further recover waste heat, forming exhaust gas with a temperature of 130-150°C;
the cooling water in the heat exchange pipeline of the waste heat recovery device absorbs heat and vaporizes, then saturated steam with a pressure of 0.4-0.5 MPa is obtained by undergoing steam-water separation and returned to the granulator as a fluid for granulating the molten slag;
the cooling water inside the spiral heat exchange pipeline absorbs heat and vaporizes, then saturated steam with a pressure of 1.2-1.6 MPa and a temperature of 188-201°C is obtained by undergoing steam-water separation, the saturated steam enters a superheated steam generator and is further heated to obtain superheated steam with a pressure of 1.2-1.6 MPa and a temperature of 250-350°C;
3) the granulated slag exiting the bottom of the cyclone separator enters a rotary bed, where it exchanges heat with the heat exchange pipeline carrying cooling water, cooling to 150-300°C, and then is discharged into a slag bin for storage;
the cooling water in the heat exchange pipeline of the rotary bed absorbs heat and vaporizes, and then saturated steam with a pressure of 1.2-1.6 MPa and a temperature of 188-201°C is generated by undergoing steam-water separation, the saturated steam enters a superheated steam generator and is further heated to obtain superheated steam with a pressure of 1.2-1.6 MPa and a temperature of 250-350°C;
4) the granulated slag in the slag bin is transported into a gas jet mill, where it is impacted and ground into ultrafine micropowder using superheated steam obtained in steps 2) and 3);
a pressure of the superheated steam falls to atmospheric pressure, and a temperature falls to 150-250°C, then the steam is transported to a waste heat recovery device, where it further exchanges heat with a heat exchange pipeline carrying cooling water inside the waste heat recovery device to further recover waste heat, forming exhaust gas with a temperature of 130-150°C;
the cooling water in the heat exchange pipeline of the waste heat recovery device absorbs heat and vaporizes, and then saturated steam with a pressure of 0.4-0.5 MPa is obtained by undergoing steam-water separation and returned to the granulator as a fluid for granulating the molten slag.

4. The method according to claim 2 or 3, wherein the exhaust gas is emitted after dust removal and desulfurization by a purification device.

5. The method according to claim 2 or 3, wherein in step (1), the mist fluid is one or more selected from compressed air with a pressure of 0.5-0.8 MPa, water mist with a pressure of 0.4-0.5 MPa, steam with a pressure of 0.4-0.8 MPa, and a mixture thereof.

6. The method according to claim 2 or 3, wherein in step (1), the granulated molten droplets have a solidification rate of 80% or more for granules with a particle size of 2 mm or less after cooling and solidification.

7. The method according to claim 2 or 3, wherein in step (3), the saturated steam is further heated using natural gas or mixed coal gas generated during steel making process in the superheated steam generator.

8. The method according to claim 2 or 3, wherein in step (3), the granulated slag entering the slag bin is transported to a slag powder production line and directly ground into slag micropowder with a specific surface area of 420-440 m²/kg.

9. The method according to claim 2 or 3, wherein in step (4), the ultrafine micropowder has a specific surface area of 450-750 m²/kg.

10. The method according to claim 1, wherein the granulation is carried out by using a molten slag granulation apparatus with a high-speed steam nozzle, wherein water entering a pipeline is pressurized by a water pump and then enters a heat exchanger, heat from a waste heat recovery pipeline raises the temperature of water in the heat exchanger, so that the water is in a high temperature and high pressure state above atmospheric pressure and above the boiling point temperature at normal pressure, the water vaporizes instantly at normal pressure after being ejected through a nozzle, forming a high-speed jet containing steam to impact the molten slag flowing out of a slag chute; the high-speed jet cools the molten slag and crushes it into small granules that fall into the bottom of a molten slag granulator body; mixed jet ejected from the nozzle completely turns into steam after impacting the molten slag, the steam flows out from the top of the apparatus as a waste heat resource for subsequent utilization.

11. The method according to claim 10, wherein the water entering the pipeline is pressurized by the water pump, and the pressure inside the pipeline rises to 0.1-1 MPa; heat from the waste heat recovery pipeline raises the temperature of water inside the heat exchanger to 100-182°C.

12. The method according to claim 1, wherein the granulation is carried out through a horizontal molten slag granulation process with gas-water mixing, wherein a high-speed gas flow provided by an air nozzle array component composed of gas nozzles is used to crush falling molten slag into molten slag granules; at the same time, the molten slag granules are sprayed with water mist by gas-liquid dual-fluid nozzles in a row to be rapidly cooled, and the molten slag granules are applied an auxiliary pushing force to ensure accurate entry into a rear slag granule collection section.

13. The method according to claim 12, wherein the high-speed gas flow has a speed of 90-110 m/s.

14. A molten slag granulation apparatus, comprising:
a granulation mechanism, for granulating molten slag to obtain slag granules; and
a cooling mechanism, for cooling the molten slag granules to obtain granulated slag.

15. The apparatus according to claim 14, comprising:
a flow guiding cover, which is a cylindrical structure; preferably, a cross-section of the flow guiding cover is rectangular with an aspect ratio of 2:1 to 5:1; more preferably, an inlet end of the flow guiding cover is installed with an online weighing device;
a granulator, with an outlet end connected to the inlet end of the flow guiding cover;
a cyclone separator, provided with a material inlet at its side-wall and a material outlet at its bottom, wherein the material inlet is connected to an outlet end of the flow guiding cover,
an overflow pipeline, provided with a lower part vertically inserted into the cyclone separator, and a spiral heat exchange pipeline inside it;
a first steam-water separator, provided with a cooling water inlet, a cooling water outlet, a steam inlet, and a steam outlet; wherein the cooling water inlet is connected to a cooling water pipeline, the cooling water outlet is connected to an inlet end of the spiral heat exchange pipeline inside the overflow pipeline through a pipeline and a water pump, and the steam inlet is connected to an outlet end of the spiral heat exchange pipeline inside the overflow pipeline;
a waste heat recovery device, provided with a gas inlet and a gas outlet on its shell, and a heat exchange pipeline inside it, and the gas inlet is connected to an outlet end of the overflow pipeline;
a second steam-water separator, provided with a cooling water inlet, a cooling water outlet, a steam inlet, and a steam outlet; wherein the cooling water inlet is connected to a cooling water pipeline, the cooling water outlet is connected to an inlet end of the heat exchange pipeline in the waste heat recovery device through a pipeline and a water pump, the steam inlet is connected to an outlet end of the heat exchange pipeline in the waste heat recovery device through a pipeline, and the steam outlet is connected to an inlet end of the granulator through a pipeline;
a rotary bed, which is a cylindrical structure, and provided with a heat exchange pipeline inside the rotary bed, wherein an inlet end of the rotary bed is connected to the material outlet of the cyclone separator, an outlet end of the rotary bed is connected to a slag bin, and a driving device for driving the rotary bed to rotate is arranged on the rotary bed;
a third steam-water separator, provided with a cooling water inlet, a cooling water outlet, a steam inlet, and a steam outlet; wherein the cooling water inlet is connected to a cooling water pipeline, the cooling water outlet is connected to an inlet end of the heat exchange pipeline of the rotary bed through a pipeline and a water pump, and the steam inlet is connected to an outlet end of the heat exchange pipeline of the rotary bed;
a gas jet mill, provided with a feed pipe, a gas inlet pipe, and a gas outlet pipe on its shell, wherein the feed pipe is connected to the slag bin, and the gas outlet pipe is connected to the gas inlet of the waste heat recovery device;
a superheated steam generator, provided with a gas inlet pipe and a gas outlet pipe on its shell, wherein the gas inlet pipe is connected to the steam outlet of the first steam-water separator and the steam outlet of the third steam-water separator, and the gas outlet pipe is connected to the gas inlet pipe of the gas jet mill.

16. The apparatus according to claim 15, wherein a vibrator is provided on the slag bin.

17. The apparatus according to claim 14, wherein the apparatus is a molten slag granulation apparatus using a high-speed steam nozzle, comprising:
a molten slag granulator body, which is a box structure, and provided with a slag chute for molten slag entry on one side of its upper part, and a steam outlet passage on its top;
a steam spray mechanism, comprising a first control valve, a water pump, a second control valve, a pressure gauge, a heat exchanger, a thermometer, and a nozzle arranged in sequence along a pipeline; wherein an inlet end of the pipeline is connected to a water source; the nozzle is arranged on the side wall of the molten slag granulator body where the slag chute is located, and the axial direction of the nozzle forms an angle with the axial direction of the slag chute, with the nozzle outlet facing the molten slag flowing out of the slag chute; and wherein
a waste heat recovery pipeline and a heat-exchange fluid outlet pipeline are arranged on the heat exchanger; wherein a valve is installed on the waste heat recovery pipeline.

18. The apparatus according to claim 17, wherein the axial direction of the nozzle forms an angle of 30-60° with the axial direction of the slag chute.

19. The apparatus according to claim 17, wherein the first control valve is an electro-hydraulic gate valve.

20. The apparatus according to claim 14, wherein the apparatus is an apparatus for a horizontal molten slag granulation process with gas-water mixing, comprising:
a molten slag granulator body, which is a box structure, and provided with a slag flow inlet on its top;
a high-speed air jet mechanism, comprising:
a compressor, a gas storage tank, a gas transmission pipeline connected to the gas storage tank, and an air nozzle array component connected to one end of the gas transmission pipeline; wherein a first control valve and a flowmeter are sequentially arranged on the gas transmission pipeline at an outlet end of the gas storage tank;
wherein a pressure gauge, a gas inlet pipeline, and a gas inlet valve are arranged on the gas storage tank; and
wherein the air nozzle array component comprises multiple gas flow nozzles and corresponding branch pipelines, and the branch pipelines are connected to the gas inlet pipeline; the gas flow nozzles are arranged on the upper part of one side-wall of the molten slag granulator body;
a spray mechanism, comprising: a second control valve, a water pump, a third control valve, a pressure gauge, a flowmeter, and multiple gas-liquid dual-fluid nozzles arranged in sequence along a water transmission pipeline; wherein an inlet end of the water transmission pipeline is connected to a water source; the gas-liquid dual-fluid nozzles are arranged at the upper part and the bottom of the inner side of the molten slag granulator body, and the gas-liquid dual-fluid nozzles are connected to the gas transmission pipeline and the water transmission pipeline through connecting pipelines.

21. The apparatus according to claim 20, wherein an angle of 0-20° is formed between the axial direction of the air nozzle array component and the horizontal direction.

22. The apparatus according to claim 20 or 21, wherein the air nozzle array component has a width greater than that of the slag flow inlet.

23. The apparatus according to claim 20, wherein the second control valve is an electro-hydraulic gate valve.

24. The apparatus according to claim 20, wherein the molten slag granulator body is semi-closed, and a slag granule collection section is arranged at the rear part of the molten slag granulator body.

25. The apparatus according to claim 20, wherein the gas flow nozzle is a supersonic nozzle.

26. The apparatus according to claim 14, wherein the apparatus is a molten slag granulation apparatus using a gas nozzle array, comprising:
a molten slag granulator body, which is a box structure, and provided with a slag flow inlet and a steam outlet passage on its top;
a high-speed air jet mechanism, comprising:
a compressor, a gas storage tank, a gas transmission pipeline connected to the gas storage tank, and a nozzle array connected to one end of the gas transmission pipeline; wherein a first control valve and a flowmeter are sequentially arranged in the gas transmission pipeline at an outlet end of the gas storage tank; and a pressure gauge, a gas inlet pipe, and a gas inlet valve are arranged on the gas storage tank;
wherein the nozzle array comprises multiple nozzles and corresponding branch pipelines, each branch pipeline is respectively connected to the gas transmission pipeline; and the nozzles are arranged on one side-wall of the molten slag granulator body.

27. The apparatus according to claim 26, wherein the apparatus further comprises:
a nozzle atomization mechanism, comprising a second control valve, a water pump, a third control valve, a pressure gauge, a flowmeter, and multiple atomization nozzles arranged in sequence along a water transmission pipeline; an inlet end of the water transmission pipeline is connected to a water source; the atomization nozzles are arranged at the inner bottom of the molten slag granulator body and arranged in at least two rows, with a spraying direction of water mist facing the molten slag flowing in from the slag flow inlet.

28. The apparatus according to claim 26 or 27, wherein the apparatus further comprises a waste heat recovery system, and the waste heat recovery system comprises:
a heat exchange box, provided with a feed inlet connected to a discharge outlet of the molten slag granulator body arranged on the upper part of one side-wall of the heat exchange box, and a heat exchange gas flow outlet on its top, and provided with multiple perforated bed plates along the height direction inside, and a molten slag granule outlet at its bottom;
a gas nozzle array, which is arranged at the inner bottom of the heat exchange box and below the perforated bed plates, and provided with gas nozzles opposite to the perforated bed plates; or,
the waste heat recovery system adopts a cyclone separator.

29. The apparatus according to claim 28, wherein the perforated bed plates are arranged in a zigzag pattern along the vertical direction inside the heat exchange box.

30. The apparatus according to claim 29, wherein the cyclone separator comprises a separator body, provided with a gas-solid medium inlet on one side of its upper part and connected to the discharge outlet of the molten slag granulator body, and an air outlet on its top, and a dust hopper at its bottom.

31. The apparatus according to claim 26, wherein the nozzles in the nozzle array are one or more selected from supersonic nozzles, atomization nozzles, or gas-liquid dual-fluid nozzles; preferably, the axial direction of the nozzles in the nozzle array is perpendicular to a side-wall of the molten slag granulator body.

32. The apparatus according to claim 26 or 31, wherein the nozzles in the nozzle array are arranged in multiple rows and columns, or in an arc-shape; preferably, the nozzles in adjacent rows are staggered in the vertical direction; more preferably, the number of nozzles gradually decreases or increases along the vertical direction.

33. The apparatus according to claim 26, wherein the nozzles in the nozzle array are gas-liquid dual-fluid nozzles; correspondingly, the apparatus is further installed with a nozzle water supply mechanism, and the nozzle water supply mechanism comprises a fourth control valve, a water pump, a fifth control valve, a pressure gauge, and a flowmeter arranged in sequence along a water transmission pipeline; an inlet end of the water transmission pipeline is connected to a water source, and an outlet end is connected to an inlet end of the gas-liquid dual-fluid nozzle.

34. The apparatus according to claim 14, wherein the apparatus is an apparatus capable of cleaning falling slag and granulating the slag by mist, comprising:
a molten slag granulator body, which is a box structure, and provided with a slag flow inlet on its top, and a slag granule collection section at its tail;
a gas nozzle array, arranged on one side-wall of the molten slag granulator body;
an atomization nozzle array, at the inner bottom of the molten slag granulator body, with an ejection direction of gas mist facing molten slag flowing in from the slag flow inlet;
a fallen slag cleaning nozzle, the fallen slag cleaning nozzle is arranged at the inner bottom of the molten slag granulator body, with an outlet of the fallen slag cleaning nozzle facing the inner bottom of the molten slag granulator body and the slag granule collection section.

35. The apparatus according to claim 34, wherein the axial direction of the gas nozzle array is perpendicular to one side-wall of the molten slag granulator body.

36. The apparatus according to claim 34 or 35, wherein baffles are arranged on both sides of an outlet of the gas nozzle array, and the outer sides of the baffles are respectively installed with liquid/atomization nozzles.

37. The apparatus according to claim 34, wherein the fallen slag cleaning nozzle is one or more selected from water atomization nozzles, steam atomization nozzles, high-speed gas flow nozzles, or gas-liquid dual-fluid nozzles.

38. The apparatus according to claim 34, wherein the apparatus further comprises:
a high-speed air jet mechanism, comprising a compressor, a gas storage tank, a gas transmission pipeline connected to the gas storage tank, and a gas nozzle array connected to one end of the gas transmission pipeline; wherein a first control valve and a flowmeter are sequentially arranged on the gas transmission pipeline at the outlet end of the gas storage tank, and a pressure gauge, a gas inlet pipe, and a gas inlet valve are arranged on the gas storage tank; the nozzle array comprises several nozzles and corresponding branch pipelines, the branch pipelines are connected to the gas transmission pipeline, and the fallen slag cleaning nozzle is connected to the gas transmission pipeline through a connecting pipeline and a valve;
a nozzle atomization mechanism, comprising a second control valve, a water pump, a third control valve, a pressure gauge, and a flowmeter arranged in sequence along a water transmission pipeline, wherein an inlet end of the water transmission pipeline is connected to a water source, and an outlet end of the water transmission pipeline is connected to the atomization nozzle array.

39. The apparatus according to claim 34 or 38, wherein the nozzles in the atomization nozzle array are gas-liquid dual-fluid nozzles, and inlet ends of the gas-liquid dual-fluid nozzles are respectively connected to the gas transmission pipeline and the water transmission pipeline.

40. The apparatus according to claim 34, 35, or 38, wherein at least two slag flow inlets are arranged on the top of the molten slag granulator body.

41. The apparatus according to claim 14, wherein the apparatus is an apparatus for rapidly cooling molten slag using atomization nozzles, comprising:
a molten slag granulator body, which is a box structure, and provided with a slag flow inlet on its top;
a gas nozzle array, arranged on one side-wall of the molten slag granulator body, and wherein the axial direction of the gas nozzles in the gas nozzle array is perpendicular to one side-wall of the molten slag granulator body;
a flow field optimization nozzle array, arranged at the inner upper part of the molten slag granulator body, near the slag flow inlet;
a slag cleaning nozzle array, arranged at the inner lower part or the bottom of the molten slag granulator body;
an atomization nozzle array, arranged inside the molten slag granulator body and radially around the slag flow on the inner wall of the molten slag granulator body, wherein the axial direction of the atomization nozzle in the atomization nozzle array is perpendicular to the axial direction of the gas nozzles.

42. The apparatus according to claim 41, wherein the slag granule collection section is arranged at the tail of the molten slag granulator body.

43. The apparatus according to claim 41, wherein the nozzles of the flow field optimization nozzle array are gas nozzles or gas-liquid dual-fluid nozzles.

44. The apparatus according to claim 41, wherein the nozzles of the slag cleaning nozzle array are gas nozzles.

45. The apparatus according to claim 41, wherein the nozzles of the atomization nozzle array are water atomization nozzles.

46. The apparatus according to claim 14, wherein the apparatus is a water mist granulation apparatus for molten slag granulation, comprising:
a rack, which is a frame structure;
a water nozzle array component, comprising,
a body, which is a box structure, and arranged in the middle of the rack; provided with a flow equalization plate and a flow guide plate at intervals in sequence inside it; wherein the rear end of the body is connected to a water source;
a water nozzle array, uniformly arranged on the front surface of the body;
a gas-liquid dual-fluid nozzle component, comprising,
gas-liquid dual-fluid nozzles, arranged in parallel on both sides of the water nozzle array and fixed on the rack;
a gas pipeline and a water transmission pipeline, both fixed on the rack and connected to the gas-liquid dual-fluid nozzles.

47. The apparatus according to claim 46, wherein the gas-liquid dual-fluid nozzles are arranged in parallel on both sides of the water nozzle array.
